(19) Europäisches Patentamt
European Patent Office
Office européen des brevets

(11) **EP 4 499 276 B1**

(12) **EUROPEAN PATENT SPECIFICATION**

(45) Date of publication and mention of the grant of the patent:
**01.07.2026 Bulletin 2026/27**

(21) Application number: **23714650.1**

(22) Date of filing: **21.03.2023**

(51) International Patent Classification (IPC):
***B01D 61/44*** *(2006.01)* ***C02F 1/469*** *(2023.01)*
***C08F 112/34*** *(2006.01)* ***C08F 212/34*** *(2006.01)*
***C09D 125/18*** *(2006.01)*

(52) Cooperative Patent Classification (CPC):
(C-Sets available)
**C08F 212/34; B01D 61/445; B01D 67/0006; B01D 67/0009; B01D 69/1216; C02F 1/4693; C08F 112/34; C09D 125/18;** B01D 2323/345; B01D 2325/14; B01D 2325/16; B01D 2325/42
(Cont.)

(86) International application number:
**PCT/EP2023/057176**

(87) International publication number:
**WO 2023/186619 (05.10.2023 Gazette 2023/40)**

(54) **BIPOLAR MEMBRANES**

BIPOLARE MEMBRANEN

MEMBRANES BIPOLAIRES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **31.03.2022 GB 202204625**

(43) Date of publication of application:
**05.02.2025 Bulletin 2025/06**

(73) Proprietors:
- **Fujifilm Manufacturing Europe BV**
  **5047 TK Tilburg (NL)**
- **FUJIFILM Corporation**
  **Tokyo 106-8620 (JP)**

(72) Inventors:
- **RIPKEN, Renée Maria**
  **5047 TK Tilburg (NL)**
- **HESSING, Jacko**
  **5047 TK Tilburg (NL)**
- **HUERTA MARTINEZ, Elisa**
  **5047 TK Tilburg (NL)**

(74) Representative: **Kraus & Lederer PartGmbB**
**Thomas-Wimmer-Ring 15**
**80539 München (DE)**

(56) References cited:
**WO-A1-2022/207469**
**CN-A- 112 516 808**
**JP-A- 2020 097 648**
**US-A- 5 401 408**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 499 276 B1

(52) Cooperative Patent Classification (CPC): (Cont.)

C-Sets
**C08F 212/34, C08F 212/18;**
**C08F 212/34, C08F 212/26;**
**C08F 212/34, C08F 212/30;**
**C08F 212/34, C08F 212/36**

## Description

This invention relates to bipolar membranes and to processes for their preparation and use.

Ion exchange membranes of various types are known, including cation exchange membranes, anion exchange and bipolar membranes. Cation exchange membranes and anion exchange are generally categorized as such depending on their predominant charge. Cation exchange membranes comprise negatively charged groups that allow the passage of cations but reject anions, while anion exchange membranes comprise positively charged groups that allow the passage of anions but reject cations. Bipolar membranes (BPMs) have both a cationic layer (sometimes called an anion exchange layer or "AEL") and an anionic layer (sometimes called a cation exchange layer or "CEL"). Some BPMs further comprise an intermediate layer between the AEL and the CEL.

Some ion exchange membranes comprise a porous support which provides mechanical strength. Such membranes are often called "composite membranes" due to the presence of both an ionically charged polymer which discriminates between oppositely charged ions and the porous support which provides mechanical strength.

BPMs are used for a number of purposes, including bipolar electrodialysis. In bipolar electrodialysis, $H^+$ and $OH^-$ ions are generated at the interface of the BPM's cationically charged anion exchange layer and anionically charged cation exchange layer by means of a water dissociation reaction (WDR). The $H^+$ and $OH^-$ ions generated travel selectively across the corresponding ion exchange layers towards the cathode and the anode respectively. Simultaneously, in bipolar electrodialysis devices comprising a bipolar membrane, an anion exchange membrane (AEM) and a cation exchange membrane (CEM), the AEM and CEM take care of selectively separating the salt ions (i.e. cations and anions) of a feed stream according to their charge. The salt anion will then combine with the $H^+$ formed by the WDR to form an acid and the salt cation will combine with the $OH^-$ to form a base. For example, if NaCl is used in the feed stream, the AEM and CEM will separate $Na^+$ from $Cl^-$ such that NaOH and HCl are formed. In this process, the BPM has a double role: on the one hand it takes care of splitting the water to generate the $H^+$ and $OH^-$. On the other hand, it prevents the ion crossover (i.e. the undesired transport of ions through the BPM, i.e. ions other than $H^+$ and $OH^-$) and therefore the BPM is responsible for the purity of the acid and base produced by the device. In other words, the BPM is responsible for how much $Cl^-$ is present in the NaOH compartment and how much $Na^+$ is present in the HCl compartment. The ion crossover depends on the permselectivity (PS) of each layer of the BPM. In a BPM, the PS cannot be determined directly. However, there is a way to indirectly measure the overall ion crossover of a BPM: the leak current. A higher leak current means higher ion crossover and therefore lower product purity. One strategy for decreasing the leak current in BPMs (and thereby obtain higher purity acid and base products) is to use thick ion exchange layers (i.e. thick AEL and CEL). However, increasing the thickness of the CEL and/or AEL also results in a higher material costs per $m^2$ of BPM. Furthermore, when the AEL and CEL of a BPM are very thick, water transport to the interface between the AEL and CEL of the BPM is reduced. Then in some cases the water molecules that are dissociated at the AEL/CEL interface cannot be replenished fast enough, resulting in decreased performance of the BPM, especially at higher current densities.

US5401408 describes a bipolar membrane comprising a cation exchange membrane, an anion exchange membrane and an inorganic ion exchanger layer having a thickness of from 0.01 to 100 mu m present at the interface between the cation exchange membrane and the anion exchange membrane. The anion exchange membrane was made of a styrene-divinylbenzene copolymer; the cation exchange membrane was made of a copolymer of $CF_2=CF_2$ with $CF_2=CFOCF_2CF(CF_3)OCF_2CF_2SO_3H$.

An objective of the present invention is to provide BPMs which do not need a thick CEL, have good permselectivity and which can be used to produce acids and bases of high purity.

According to a first aspect of the present invention there is provided a bipolar membrane (BPM) comprising an anion exchange layer (AEL) and a cation exchange layer (CEL), wherein the cation exchange layer is obtainable by curing a curable composition comprising:

(a1) a first crosslinking agent comprising an anionic group and at least two polymerisable groups;
(b1) a second crosslinking agent comprising at least two polymerisable groups being free from anionic groups;

wherein the molar ratio of component (a1) to component (b1) is at least 1; and
wherein the molecular weight of the second crosslinking agent is below 500 Da.

In this document (including its claims), the verb "comprise" and its conjugations is used in its non-limiting sense to mean that items following the word are included, but items not specifically mentioned are not excluded. In addition, reference to an element by the indefinite article "a" or "an" does not exclude the possibility that more than one of the elements is present, unless the context clearly requires that there be one and only one of the elements. The indefinite article "a" or "an" thus usually mean "at least one". The crosslinking agent comprising an anionic group and at least two polymerisable groups is often referred to herein as the "first crosslinking agent". The crosslinking agent comprising at least two polymerisable groups and being free from anionic groups is often referred to herein as the "second crosslinking agent".

For brevity the curable composition comprising components (a1) and (b1) is often referred to herein as the "first curable composition". The bipolar membrane (BPM) is also referred to as "polymer film".

BRIEF DESCRIPTION OF THE DRAWINGS:

FIG. 1 illustrates schematically a bipolar electrodialysis device (BE device) according to the present invention.

FIG. 1 illustrates a bipolar electrodialysis device (10) comprising a bipolar electrodialysis enclosure (12), an anode (14) provided inside the bipolar electrodialysis enclosure (12) and a cathode (15) provided on the side opposite to the anode (14). The device comprises five cation exchange membranes (C) and five anion exchange membranes (A) (only 2 of each are shown) and six bipolar membranes (BP) according to the present invention (only 4 are shown) provided alternately between the anode (14) and the cathode (15). A feed tank (17) is connected to the channels (27) between (A) and (C). An acid tank (18) is connected to the channels (28) between (BP) and (A). A base tank (19) is connected to the channels (29) between (BP) and (C). An electrolyte tank (16) is connected to the channels (26) between (BP)s and electrodes (14, 15).

Component (a1) may contain one first crosslinking agent or more than one first crosslinking agent, e.g. 2, 3 or 4 first crosslinking agents, each comprising an anionic group and at least two polymerisable groups.

The first crosslinking agent (a1) preferably comprises a bissulphonylimide group (i.e. a group of the formula $-SO_2$-N $-SO_2$-) and this group may provide the anionic group.

Preferably the first crosslinking agent further comprises at least one aromatic group.

The polymerisable groups present in the first crosslinking agent (component (a1)) are preferably each independently selected from ethylenically unsaturated groups and thiol groups (e.g. alkylenethiol, preferably $-C_{1-3}$-SH).

Optionally the polymerisable groups comprise an optionally substituted alkylene group (e.g. optionally substituted $C_{1-6}$-alkylene) and/or an optionally substituted arylene group (e.g. optionally substituted $C_{6-18}$-arylene). The preferred substituents, when present, include $C_{1-4}$-alkyl, $C_{1-4}$-alkoxy, sulpho, carboxy, and hydroxyl groups. The polymerisable groups are more preferably selected from ethylenically unsaturated groups (e.g. vinyl groups and allyl groups) and optionally substituted thiol groups (e.g. alkylenethiol, preferably $-C_{1-3}$-SH).

Preferred ethylenically unsaturated groups include vinyl groups, (meth)acrylic groups (e.g. $CH_2=CR^1-C(O)$-groups), especially (meth)acrylate groups (e.g. $CH_2=CR^1-C(O)O$-groups) and (meth)acrylamide groups (e.g. $CH_2=CR^1-C(O)NR^1$- groups), wherein each $R^1$ independently is H or $CH_3$). Most preferred ethylenically unsaturated groups comprise or are vinyl groups ($CH_2=CH$- groups).

Preferably the first crosslinking agent is free from fluoro groups. Fluoro groups are F atoms covalently bound to a carbon atom. Fluoro groups are preferably absent from the first crosslinking agent because crosslinking agents comprising fluoro groups are often less soluble in aqueous liquids and because cross-linking agents free from fluoro groups are more environmentally-friendly.

Preferably the first crosslinking agent is free from chloro groups. Chloro groups are Cl atoms covalently bound to a carbon atom.

The first crosslinking agent (component (a1)) is preferably a compound of the Formula (I):

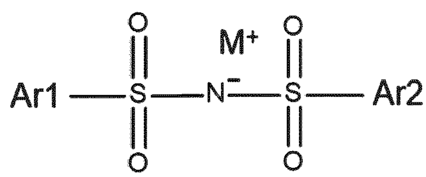

Formula (I)

wherein:

M+ is a cation; and
Ar1 and Ar2 are aromatic groups;

wherein:

(i) at least one of Ar1 and Ar2 comprises a polymerisable group; and
(ii) the compound of Formula (I) comprises at least two polymerisable groups.

$M^+$ is preferably an ammonium cation or an alkali metal cation, especially $Li^+$. When $M^+$ is $Li^+$ the resultant compound of Formula (I) has a particularly good solubility in water and aqueous liquids.

Ar1 and/or Ar2 may comprise further substituents, e.g. a $C_{1-4}$-alkyl, $C_{1-4}$-alkoxy, amino, $C_{1-4}$-alkyamine, sulpho, carboxy or hydroxyl group or two or more thereof.
Ar1 and Ar2 are preferably optionally substituted $C_{6-18}$-arylene, e.g. optionally substituted phenyl or optionally substituted naphtyl.

Illustrative methods for preparing the first crosslinking agents can be found below in the Examples section below. Furthermore, many compounds of Formula (I) are commercially available or may be prepared by a process comprising the steps of:

(i) providing a compound of Formula Ar1-$SO_2$X wherein X is a halide (e.g. chloride, bromide or fluoride) and Ar1 is as hereinbefore defined;
(ii) reacting the compound of Formula Ar1-$SO_2$X (as defined above) with a compound of the formula $H_2$N-Ar2 (wherein Ar2 is as hereinbefore defined) to obtain the compound of Formula (I).

Examples of first crosslinking agents which may be used as component (a1) (either alone or in combination) include compounds of the following formulae:

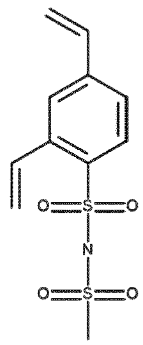

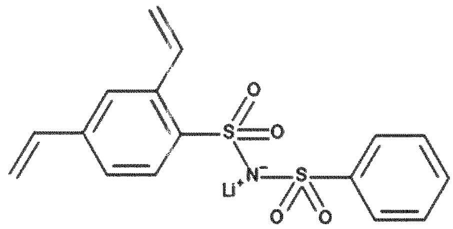

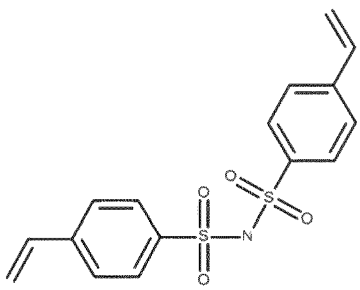

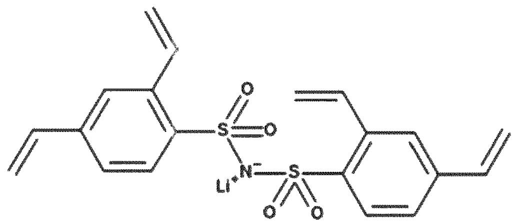

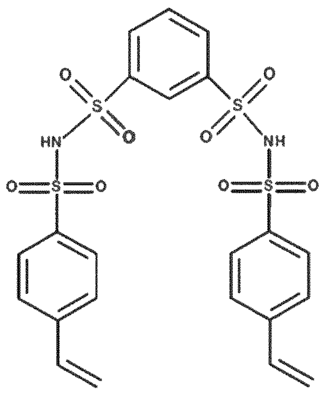

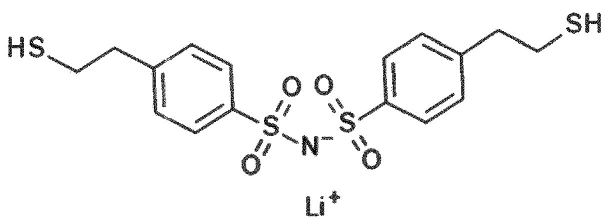

Preferably the first curable composition comprises 20 to 80 wt%, more preferably 30 to 70wt%, of component (a1).
Preferably the first crosslinking agent comprises 2, 3 or 4 polymerisable groups, more preferably 2 or 3 polymerisable groups and especially 2 polymerisable groups.

As the second crosslinking agent is free from anionic groups it cannot comprise a group of the formula $-SO_2-N^--SO_2-$. Therefore, the second crosslinking agent (component (b1)) is preferably free from ammonium, carboxylic acid, bissulphonylimide, sulphonic acid and sulphonate groups.

In some embodiments the second crosslinking agent (component (b1)) comprises an aromatic group, e.g. a phenylene, naphthylene or triazine group. In other embodiments the second crosslinking agent (component (b1)) is free from aromatic groups.

Preferably the second crosslinking agent (component (b1)) comprises 2, 3 or 4 polymerisable groups, more preferably 2 or 3 polymerisable groups and especially 2 polymerisable groups.

In a preferred embodiment the second crosslinking agent (component (b1)) is of Formula (II):

$$(R')_n\text{-}A \qquad \text{Formula (II)}$$

wherein:
each R' independently is or comprises a polymerisable group or a non-polymerisable group;

n has a value of 2, 3 or 4; and
A is a linking group;

provided that the compound of Formula (II) comprises at least two polymerisable groups and is free from ionic groups.

The polymerisable groups present in the second crosslinking agent (e.g. represented by R' in Formula (II)) are preferably as described above in relation to the first crosslinking agent.

The non-polymerisable groups in R' include amino, alkyl (especially $C_{1-4}$-alkyl) and aryl (especially phenyl or naphthyl), each of which is unsubstituted or carries one or more non-polymerisable substituents, e.g. $C_{1-4}$-alkyl, $C_{1-4}$-alkoxy, amino, $C_{1-4}$-alkyamine, sulpho, carboxy, or hydroxyl group.

In a preferred embodiment, the polymerisable groups present in the first and the second crosslinking agent are preferably each independently selected from ethylenically unsaturated groups and thiol groups (e.g. alkylenethiol, preferably $-C_{1-3}$-SH). Preferred ethylenically unsaturated groups for component (b1) are as described above in relation to component (a1).

Preferably in Formula (II) each R' is a vinyl group, an allyl group or a $C_{0-3}$-alkylene-thiol group.

The second crosslinking agent may be obtained commercially or it (or they) may be prepared by methods known in the art.

Preferably the second crosslinking agent is free from fluoro and/or chloro groups.

In Formula (II), A is preferably N (a nitrogen atom) or an optionally substituted alkylene group (e.g. optionally substituted $C_{1-6}$-alkylene) or an optionally substituted arylene group (e.g. optionally substituted $C_{6-18}$-arylene). The preferred substituents, when present, include $C_{1-4}$-alkyl, $C_{1-4}$-alkoxy and hydroxyl groups.

In a preferred embodiment, in Formula (II):

(i) n has a value of 2, 3 or 4 and A is $C_{1-6}$-alkylene or $C_{6-18}$-arylene; or
(ii) A is N (a nitrogen atom), n has a value of 3 and either all three of the groups represented by R' comprise a polymerisable group or two of the groups represented by R' comprise a polymerisable group and the third group represented by R' is H or $C_{1-4}$ alkyl; or
(iii) A is a triazine group or a cyanuric acid derivative, n has a value of 3 and either all three of the groups represented by R' comprise a polymerisable group or two of the groups represented by R' comprise a polymerisable group and the third group represented by R' is $C_{1-4}$ alkoxy or $C_{1-4}$ alkyl.

The second crosslinking agent has a molecular weight below 500 Da, more preferably below 400 Da, especially below 300 Da, more especially below 260 Da. When the second crosslinking agent ((b1)) has a low molecular weight the ion exchange capacity of the resultant CEL is usually not adversely affected to a significant extent.

In a preferred embodiment the second crosslinking agent is a liquid at the temperature at which the CEL is prepared. Preferably the second crosslinking agent has a melting point below 80°C, more preferably below 50°C, especially below 30°C, more especially below 15°C.

Preferably the boiling point of the second crosslinking agent is at least 150°C, more preferably at least 190°C.

Preferably the vapour pressure of the second crosslinking agent is below 1 mmHg, more preferably below 0.7 mmHg at 20°C or preferably below 135 Pa, more preferably below 100 Pa at 20°C.

Examples of the second crosslinking agent (component (b1)) include compounds of the following formulae:

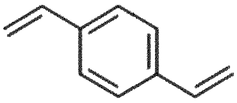 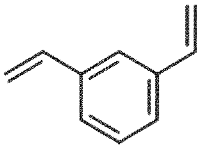 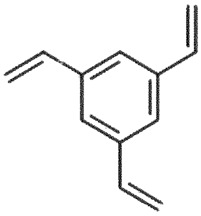 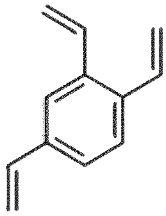

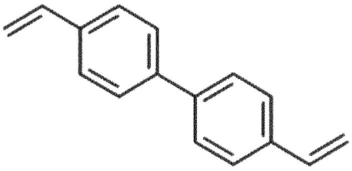 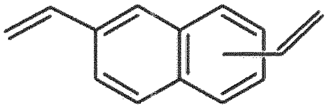 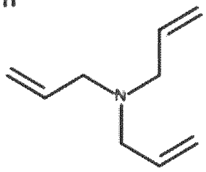

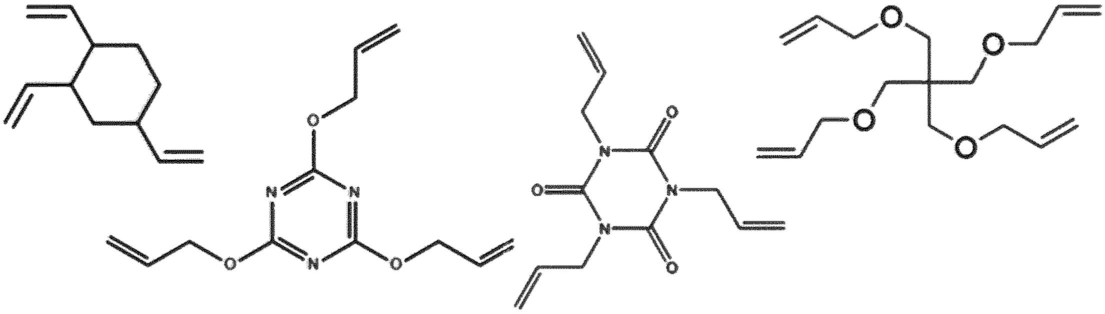

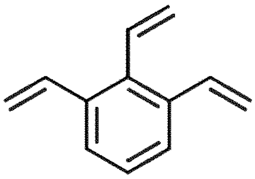 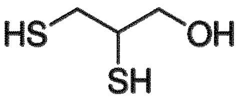 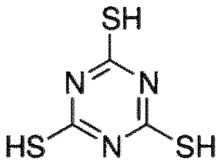 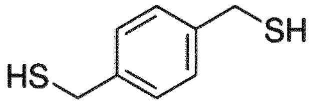

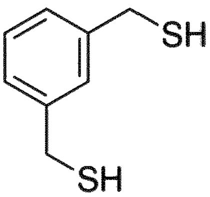 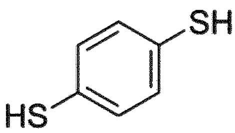 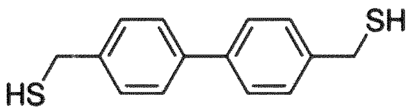 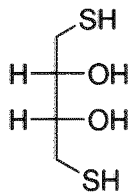

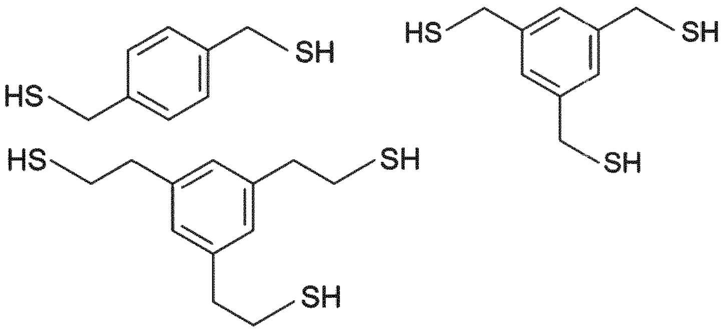 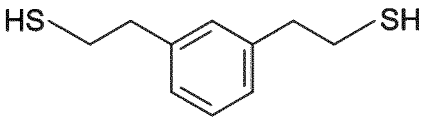 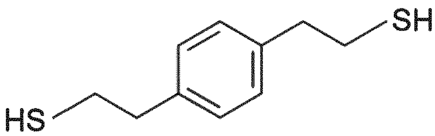

Preferably the polymerisable groups present in component (a1) are copolymerisable with the polymerisable groups present in component (b1). For example:

- the polymerisable groups in the first and the second crosslinking agents are each independently selected from ethylenically unsaturated groups;
- the polymerisable groups in one of the first and the second crosslinking agents are thiol groups and the polymerisable groups in the other of the first and the second crosslinking agents are groups which are reactive with thiol groups, e.g.

ethylenically unsaturated groups.

Preferred second crosslinking agents which may be used as component (b1) include divinylbenzene, 2,4,6-triallyloxy-1,3,5-triazine, 1,3,5-triallylisocyanurate, triallylamine, 1,2,4-trivinylcyclohexane, tetra(allyloxy)ethane, pentaerythritol tetraallyl ether, 2,3-dimercapto-1-propanol, dithioerythritol, trithiocyanuric acid and combinations comprising two or more thereof.
The curable composition may contain one or more than one second crosslinking agent as component (b1), e.g. 2, 3 or 4 second crosslinking agents.
The curable composition from which the CEL is obtainable preferably comprises 1 to 25wt% of component (b1), more preferably 2 to 20wt% of component (b1), as this leads to less-brittle CEL's having particularly good properties.
Preferably the molar ratio of component (a1) to component (b1) in the curable composition from which the CEL is obtained is at least 1.5, more preferably at least 1.7. The molar ratio of component (a1) to component (b1) is preferably less than 10, more preferably less than 6.
The curable composition from which the CEL is obtained (i.e. the first curable composition) preferably comprises:

(a1) the crosslinking agent comprising an anionic group and at least two polymerisable groups;
(b1) the crosslinking agent comprising at least two polymerisable groups being free from anionic groups;
(c1) optionally a compound comprising one and only one polymerisable group and an anionic group;
(d1) optionally a radical initiator; and
(e1) optionally a solvent;
wherein the molar ratio of component (a1) to component (b1) is at least 1.

The abovementioned curable composition forms a second aspect of the present invention.
In this preferred composition the molar ratio of component (a1) to component (b1) is preferably at least 1.5, more preferably at least 1.7. The molar ratio of component (a1) to component (b1) is preferably less than 10, more preferably less than 6.
Preferably the curable composition according to the second aspect of the present invention comprises 0 to 40 wt%, more preferably 5 to 30% wt%, most preferably 6 to 25 wt%, of component (c1).
Preferably the curable composition according to the second aspect of the present invention comprises 0 to 10 wt%, more preferably 0.001 to 5 wt%, most preferably 0.005 to 2 wt%, of component (d1).
Preferably the curable composition according to the second aspect of the present invention comprises 0 to 40 wt%, more preferably 10 to 40 wt%, most preferably 15 to 30 wt%, of component (e1).
Preferably the amount of components (a1) + (b1) + (c1) + (d1) + (e1) add up to 100wt%.
Preferably the polymerisable group present in component (c1) (when component (c1) is present) is copolymerisable with the polymerisable groups present in component (a1) and/or (b1).
The preferred polymerisable group present in component (c1) is preferably as defined above in relation to component (a1), e.g. a vinyl group, e.g. in the form of allylic or styrenic group. Styrenic groups are preferred over e.g. (meth) acrylic groups as they increase the pH stability of the polymer film across the range of pH 0 to 14.
Examples of compounds which may be used as component (c1) include the following compounds of Formula (MB-α), (AM-B) and Formula (III):

Formula (MB-α)

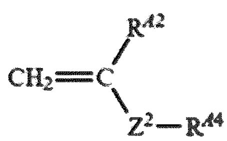

wherein in Formula (MB-α),

$R^{A2}$ represents a hydrogen atom or an alkyl group,
$R^{A4}$ represents an organic group comprising a sulpho group in free acid or salt form and having no ethylenically unsaturated group; and
$Z^2$ represents -(C=O)NRa-, wherein Ra represents a hydrogen atom or an alkyl group, preferably a hydrogen atom.

Examples of compounds of Formula (MB-α) include:

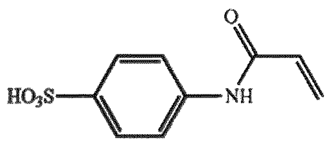
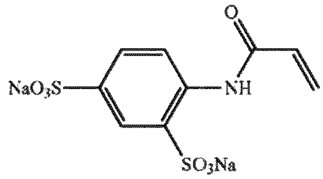
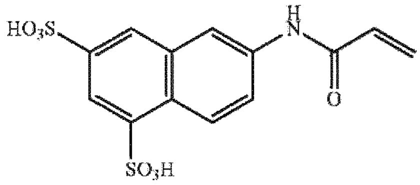
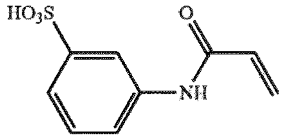
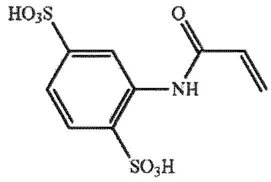
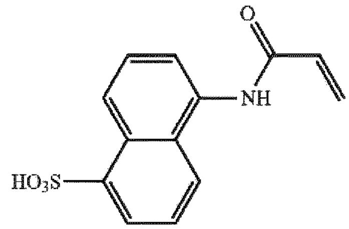
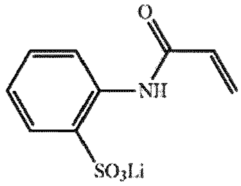
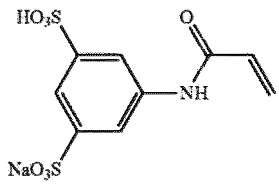

Synthesis methods for compounds of Formula (MB-α) can be found in e.g. US2015/0353696.

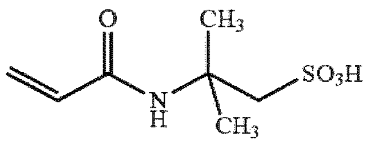
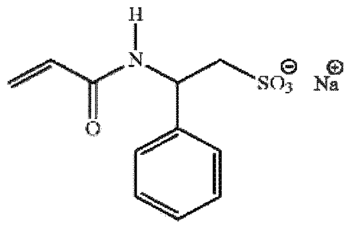

Synthesis methods for the above compounds can be found in e.g. US2016/0369017.

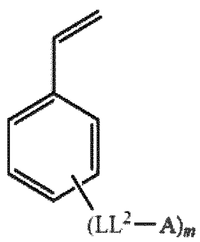

Formula (AM-B)

wherein in Formula (AM-B):

$LL^2$ represents a single bond or a bivalent linking group;
A represents a sulpho group in free acid or salt form; and
m represents 1 or 2.

Examples of compounds of Formula (AM-B) include:

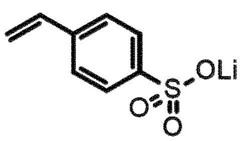
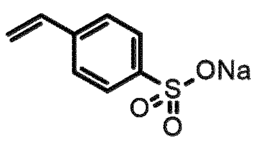

Such compounds of Formula (AM-B) are commercially available, e.g. from Tosoh Chemicals and Sigma-Aldrich.

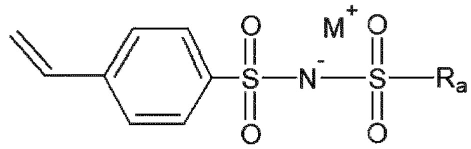

Formula (III)

wherein

$R_a$ in Formula (III) is $C_{1-4}$ alkyl, $NH_2$ or $C_{6-12}$-aryl; and
$M^+$ is a cation, preferably $H^+$, $Li^+$, $Na^+$, $K^+$, $NL_4^+$ wherein each L independently is H or $C_{1-3}$-alkyl.

Examples of compounds of Formula (III) include:

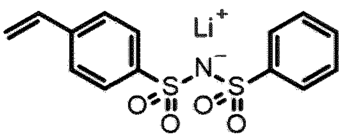

MM-P

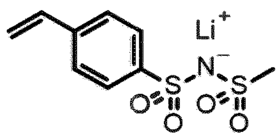

MM-M

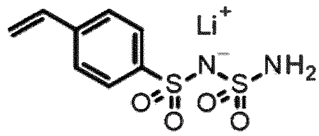

MM-A

Synthesis methods for the above compounds having the MM prefix are described in the Examples section below.
Preferably component (c1) is chosen from the compounds of Formula (AM-B) and/or Formula (III) because this can result in polymer films having especially good stability in the pH range 0 to 14.
The radical initiator is preferably a thermal initiator or a photoinitiator or a mixture comprising both a thermal initiator and a photoinitiator.
Examples of suitable thermal initiators which may be used as component (d1) include 2,2'-azobis(2-methylpropionitrile) (AIBN), 4,4'-azobis(4-cyanovaleric acid), 2,2'-azobis(2,4-dimethyl valeronitrile), 2,2'-azobis(2-methylbutyronitrile), 1,1'-azobis(cyclohexane-1-carbonitrile), 2,2'-azobis(4-methoxy-2,4-dimethyl valeronitrile), dimethyl 2,2'-azobis(2-methylpropionate), 2,2'-azobis[N-(2-propenyl)-2-methylpropionamide, 1-[(1-cyano-1-methylethyl)azo]formamide, 2,2'-Azobis(N-butyl-2-methylpropionamide), 2,2'-Azobis(N-cyclohexyl-2-methylpropionamide), 2,2'-Azobis(2-methylpropionamidine) dihydrochloride, 2,2'-Azobis[2-(2-imidazolin-2-yl)propane]dihydrochloride, 2,2'-Azobis[2-(2-imidazolin-2-yl)propane]disulphate dihydrate, 2,2'-Azobis[N-(2-carboxyethyl)-2-methylpropionamidine] hydrate, 2,2'-Azobis {2-[1-(2-hydroxyethyl)-2-imidazolin-2-yl]propane} dihydrochloride, 2,2'-Azobis[2-(2-imidazolin-2-yl)propane], 2,2'-Azobis(1-imino-1-pyrrolidino-2-ethylpropane) dihydrochloride, 2,2'-Azobis{2-methyl-N-[1, 1-bis(hydroxymethyl)-2-hydroxyethl]propionamide} and 2,2'-Azobis[2-methyl-N-(2-hydroxyethyl)propionamide].
Examples of suitable photoinitiators which may used as component (d1) include aromatic ketones, acylphosphine compounds, aromatic onium salt compounds, organic peroxides, thio compounds, hexa-arylbiimidazole compounds, ketoxime ester compounds, borate compounds, azinium compounds, metallocene compounds, active ester compounds, compounds having a carbon halogen bond, and an alkyl amine compounds. Preferred examples of the aromatic ketones, the acylphosphine oxide compound, and the thio-compound include compounds having a benzophenone skeleton or a thioxanthone skeleton described in "RADIATION CURING IN POLYMER SCIENCE AND TECHNOLOGY", pp.77-117 (1993). More preferred examples thereof include an alpha-thiobenzophenone compound described in JP1972-6416B (JP-S47-6416B), a benzoin ether compound described in JP1972-3981B (JP-S47-3981B), an alpha-substituted benzoin compound described in JP1972-22326B (JP-S47-22326B), a benzoin derivative described in JP1972-23664B (JP-S47-23664B), an aroylphosphonic acid ester described in JP1982-30704A (JP-S57-30704A), dialkoxybenzophenone described in JP1985-26483B (JP-S60-26483B), benzoin ethers described in JP1985-26403B (JP-S60-26403B) and JP1987-81345A (JPS62-81345A), alpha-amino benzophenones described in JP1989-34242B (JP H01-34242B), U.S. Pat. No. 4,318,791A, and EP0284561A1, p-di(dimethylaminobenzoyl) benzene described in JP1990-211452A (JP-H02- 211452A), a thio substituted aromatic ketone described in JP1986-194062A (JPS61-194062A), an acylphosphine sulphide described in JP1990-9597B (JP-H02-9597B), an acylphosphine described in JP1990-9596B (JP-H02-9596B), thioxanthones described in JP1988-61950B (JP-S63-61950B), and coumarins described in JP1984-42864B (JP-S59-42864B). In addition, the photoinitiators described in JP2008-105379A and JP2009-114290A are also preferable. In addition, photoinitiators described in pp. 65 to 148 of "Ultraviolet Curing System" written by Kato Kiyomi (published by Research Center Co., Ltd., 1989) may be used.
Especially preferred photoinitiators include Norrish Type II photoinitiators having an absorption maximum at a

wavelength longer than 380nm, when measured in one or more of the following solvents at a temperature of 23°C: water, ethanol and toluene. Examples include a xanthene, flavin, curcumin, porphyrin, anthraquinone, phenoxazine, camphorquinone, phenazine, acridine, phenothiazine, xanthone, thioxanthone, thioxanthene, acridone, flavone, coumarin, fluorenone, quinoline, quinolone, naphtaquinone, quinolinone, arylmethane, azo, benzophenone, carotenoid, cyanine, phtalocyanine, dipyrrin, squarine, stilbene, styryl, triazine or anthocyanin-derived photoinitiator.

When the first curable composition is cured by electron beam or gamma radiation component (d1) is not needed.

Preferably component (e1) of the composition is an inert solvent. In other words, preferably component (e1) does not react with any of the other components of the composition.

In one embodiment the component (e1) preferably comprises water and optionally an organic solvent, especially where some or all of the organic solvent is water miscible. The water is useful for dissolving component (a1) and possibly also component (c1) and the organic solvent is useful for dissolving component (b1) or any other organic components present in the composition.

Component (e1) is useful for reducing the viscosity and/or surface tension of the composition. In some embodiments, the composition comprises 10 to 40wt%, especially 15 to 30 wt%, of component (e1).

Examples of inert solvents which may be used as or in component (e1) include water, alcohol-based solvents, ether-based solvents, amide-based solvents, ketone-based solvents, sulphoxide-based solvents, sulphone-based solvents, nitrile-based solvents and organic phosphorus-based solvents. Examples of alcohol-based solvents which may be used as or in component (e1) (especially in combination with water) include methanol, ethanol, isopropanol, n-butanol, diacetone alcohol, ethylene glycol, propylene glycol, diethylene glycol, dipropylene glycol and mixtures comprising two or more thereof. In addition, preferred inert, organic solvents which may be used in component (e1) include dimethyl sulphoxide, dimethyl imidazolidinone, sulpholane, N-methylpyrrolidone, dimethyl formamide, acetonitrile, acetone, 1,4-dioxane, 1,3-dioxolane, tetramethyl urea, hexamethyl phosphoramide, hexamethyl phosphorotriamide, pyridine, propionitrile, butanone, cyclohexanone, tetrahydrofuran, tetrahydropyran, 2-methyltetrahydrofuran, ethylene glycol diacetate, cyclopentylmethylether, methylethylketone, ethyl acetate, y-butyrolactone and mixtures comprising two or more thereof. Dimethyl sulphoxide, N-methyl pyrrolidone, dimethyl formamide, dimethyl imidazolidinone, sulpholane, acetone, cyclopentylmethylether, methylethylketone, acetonitrile, tetrahydrofuran, 2-methyltetrahydrofuran and mixtures comprising two or more thereof are preferable.

Optionally the CEL comprises a porous support.

As mentioned above, the present invention provides BPMs having a thin CEL without compromising current leaking and while retaining good permselectivity. Thus in a preferred embodiment the CEL preferably has an average thickness of 30 to 120μm, more preferably 40 to 110μm and especially 50 to 100μm. Thickness measurements are performed by Scanning Electron Microscopy (SEM) with Energy Dispersive X-Ray Analysis (EDX) or optical microscope using a cross section of the BPM. The boundaries between layers are clearly visible, e.g. by contrasting colors in SEM-EDX or contrasting texture in the micrographs.

The AEL is preferably obtainable by curing a (second) curable composition (hereinafter referred to as the "second curable composition") comprising:

(a2) 10 to 88 wt% of a curable compound comprising a cationic group and at least two polymerisable groups;
(b2) 0 to 25wt% of a curable compound comprising at least two polymerisable groups and being free from cationic groups;
(c2) 0 to 60 wt% of a curable compound having a cationic group and one and only one polymerisable group;
(d2) 0 to 10 wt% of radical initiator; and
(e2) 0 to 55 wt% of solvent.

Preferably component (a2) is of the Formula (A) or Formula (CL) and preferably component (c2) is of Formula (B) or Formula (SM):

Formula (A)

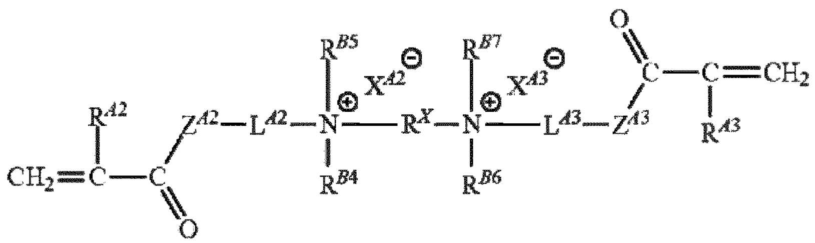

Formula (B)

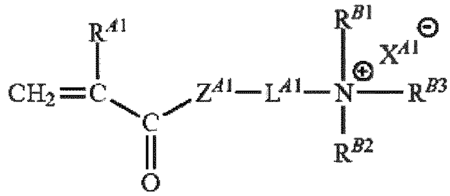

wherein in Formulae (A) and (B):

- $R^{A1}$ to $R^{A3}$ each independently represent a hydrogen atom or an alkyl group;
- $R^{B1}$ to $R^{B7}$ each independently represent an alkyl group or an aryl group;
- $Z^{A1}$ to $Z^{A3}$ each independently represent -O- or -NRa-, wherein Ra represents a hydrogen atom or an alkyl group;
- $L^{A1}$ to $L^{A3}$ each independently represent an alkylene group, an arylene group or a divalent linking group of a combination thereof;
- $R^X$ represents a divalent linking group, e.g. an alkylene group, an alkenylene group, an alkynylene group, an arylene group, or a combination thereof; and
- $X^{A1}$ to $X^{A3}$ each independently represent an organic or inorganic anion, preferably a halogen ion or an aliphatic or aromatic carboxylic acid ion.

Examples of compounds of Formula (A) or (B) include:

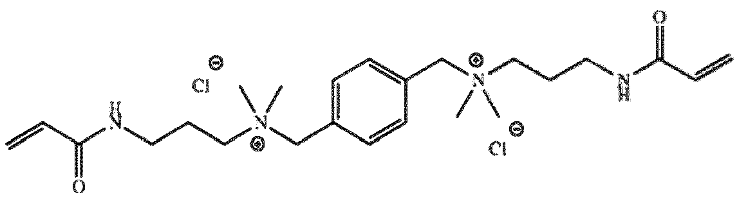

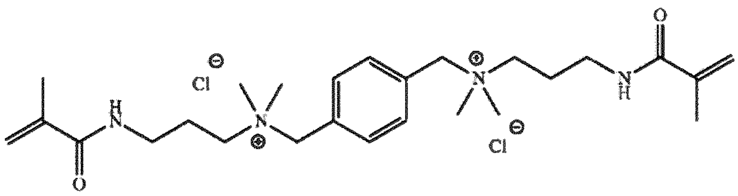

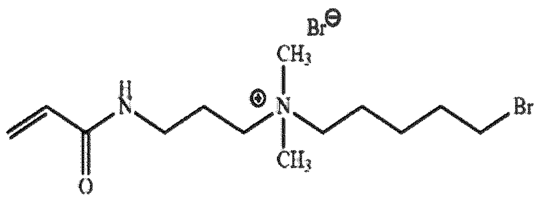

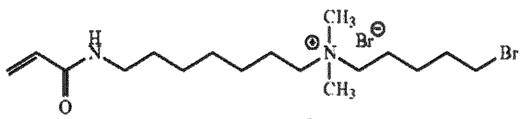

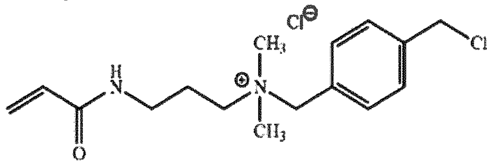

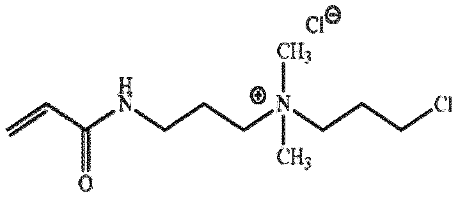

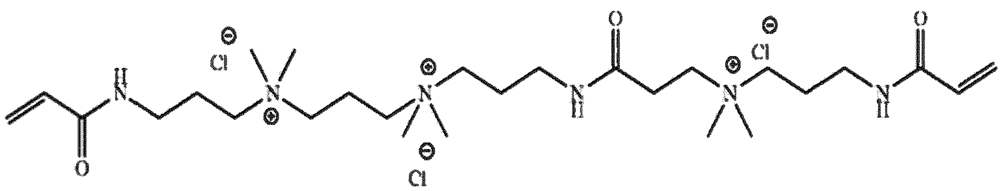

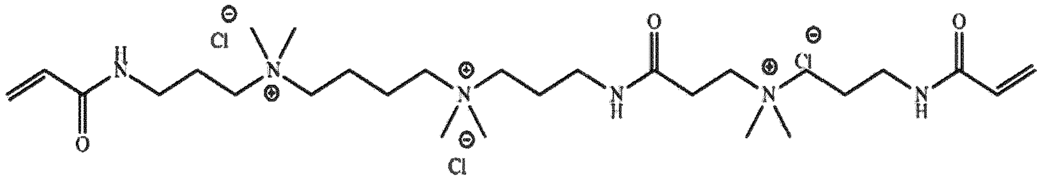

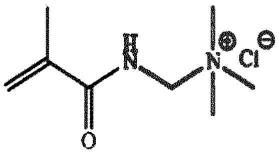

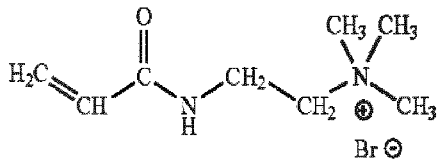

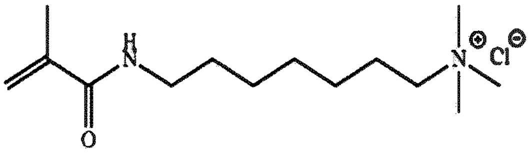

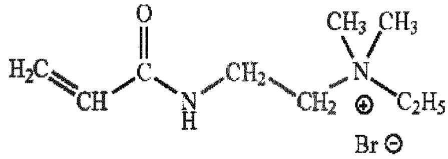

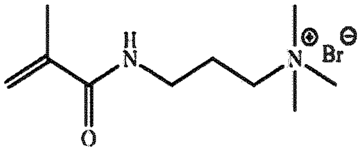

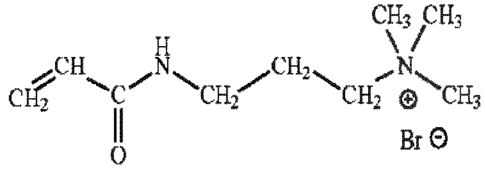

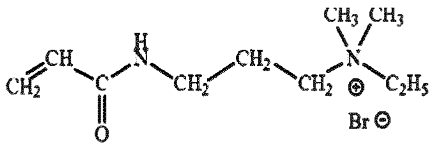

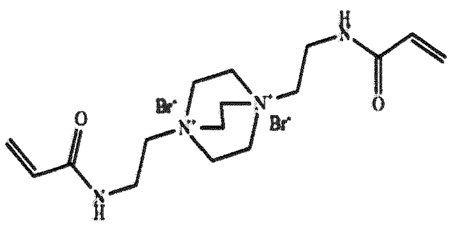

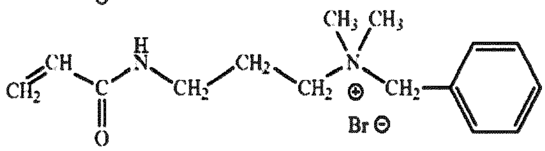

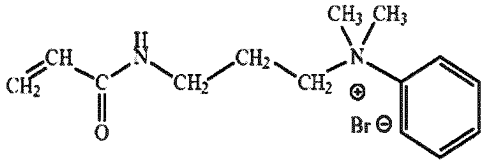

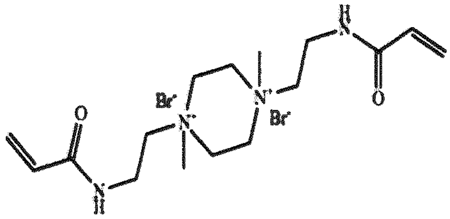

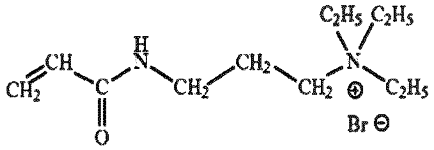

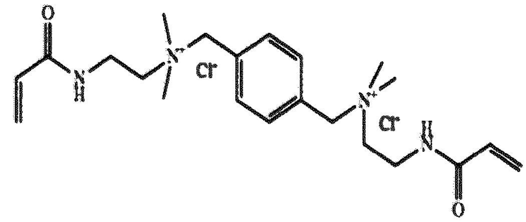

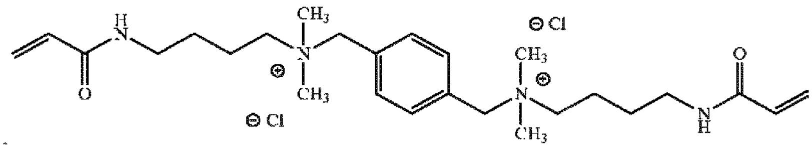

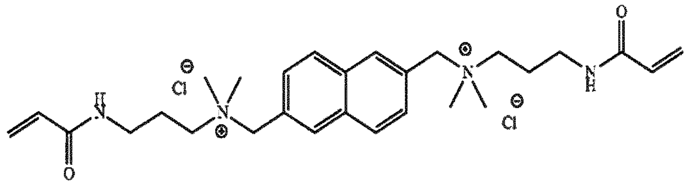

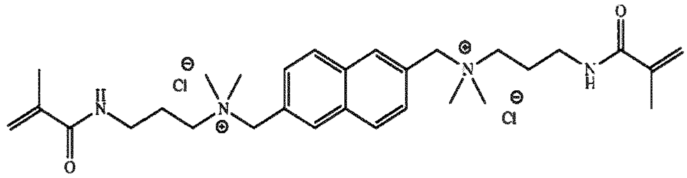

Synthesis methods can be found in e.g. US2015/0353721, US2016/0367980 and US2014/0378561.

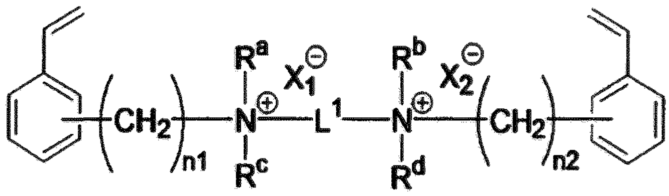

(CL)

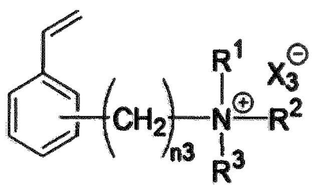

(SM)

wherein in Formulae (CL) and (SM):

- $L^1$ represents an alkylene group or an alkenylene group;
- $R^a$, $R^b$, $R^c$, and $R^d$ each independently represent a linear or branched alkyl group or an aryl group, $R^a$ and $R^b$, and/or $R^c$ and $R^d$ may form a ring by being bonded to each other;
- $R^1$, $R^2$, and $R^3$ each independently represent a linear or branched alkyl group or an aryl group, $R^1$ and $R^2$, or $R^1$, $R^2$ and $R^3$ may form an aliphatic heterocycle by being bonded to each other;
- n1, n2 and n3 each independently represent an integer of 1 to 10; and
- $X_1^-$, $X_2^-$ and $X_3^-$ each independently represent an organic or inorganic anion.

Examples of compounds of Formula (CL) or (SM) include:

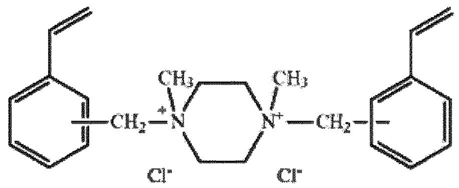

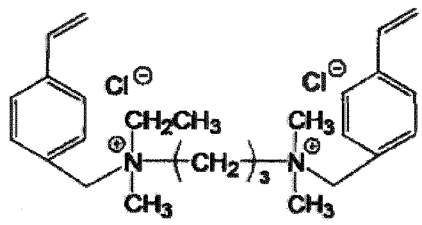

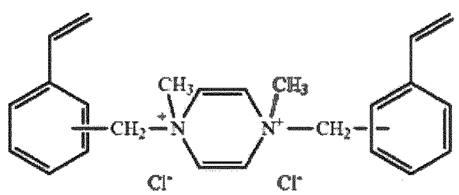

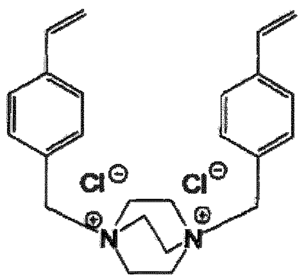

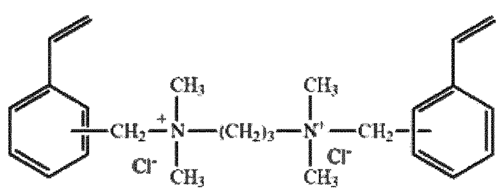

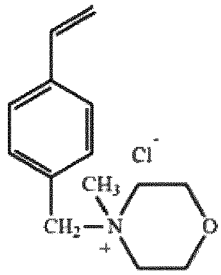

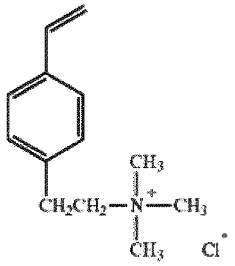

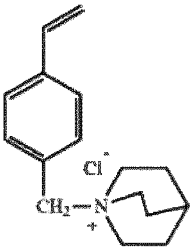

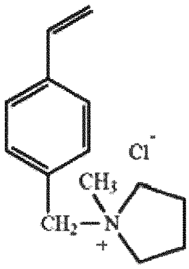

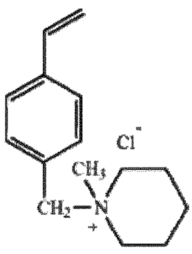

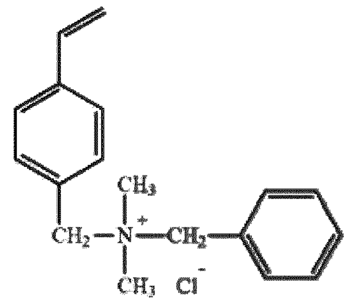

Synthesis methods can be found in EP3184558 and US2016/0001238.

The second curable composition preferably comprises 15 to 80wt%, especially 20 to 70wt%, of component (a2).

The second curable composition preferably comprises 0 to 40wt% of component (c2).

Component (b2) is preferably as defined above for component (b1). The second curable composition preferably comprises 0 to 20wt% of component (b2).

Components (d2) and (e2) are preferably as defined above for components (d1) and (e1) respectively. The second curable composition preferably comprises 0 to 10 wt%, more preferably 0.001 to 5 wt%, most preferably 0.005 to 2 wt%, of component (d2). Preferably the second curable composition comprises 0 to 40 wt%, more preferably 10 to 40 wt%, most preferably 15 to 30 wt%, of component (e2).

Preferably the amount of components (a2) + (b2) + (c2) + (d2) + (e2) add up to 100wt%.

Optionally the AEL comprises a porous support.

The BPM according to the first aspect of the present invention preferably further comprises an intermediate layer (IL) located between the CEL and the AEL.

Preferably the intermediate layer comprises a co-continuous polymeric network of (i) a first polymer having ionic groups and a network of pores; and (ii) a second polymer having ionic groups of charge opposite to the charge of the ionic groups of the first polymer and being present in the network of pores of the first polymer.

In order to achieve the two opposite charges required for the first polymer and the second polymer, one of the first and second polymers is a cationic polymer (i.e. carries positively charged groups) and the other is an anionic polymer (i.e. carries negatively charged groups). In one embodiment the first polymer is anionic and the second polymer is cationic. In another embodiment the first polymer is cationic and the second polymer is anionic.

In a preferred embodiment the first polymer is obtainable by a process comprising phase-separation of the first polymer from a (third) curable composition used to prepare the first polymer, preferably by a process comprising polymerisation-induced phase separation, more preferably photopolymerisation-induced phase separation, of the first polymer from the third composition used to prepare the first polymer. In this way one may obtain the first polymer in a form which comprises a network of pores and the pores may be used to receive the second polymer (or a fourth curable composition used to prepare the second polymer) in order to make the intermediate layer and provide a co-continuous polymeric network of (i) the first polymer having ionic groups; and (ii) the second polymer having ionic groups of charge opposite to the charge of the ionic groups of the first polymer and being present within the network of pores of the first polymer. The pores in the network of pores preferably have an average pore diameter of less than 5 $\mu$m, more preferably less than 2 $\mu$m, especially less than 1 $\mu$m.

The intermediate layer preferably comprises at least two continuous intermingled polymeric domains (one domain derived from the first polymer and the other domain derived from the second polymer) having a large contact area with each other. This may be achieved by the first polymer comprising a network of pores and the second polymer being different to the first polymer (e.g. one is cationic and the other is anionic) and being present within the network of pores of the first polymer. As a result of this large contact area between the two (or more) polymers present in the intermediate layer, the amount of water molecules that are dissociated into $H^+$ and $OH^-$ per unit of time is increased and thereby the productivity of the BPM is also increased.

The large contact area between the first and second polymers present in the intermediate layer is preferably provided by the co-continuous network wherein the two (or more) polymeric domains derived from the first and second polymers bearing opposite charges (i.e. one domain has anionic charges and the other has cationic charges). An advantage of the co-continuous network is that newly produced anions (e.g. $OH^-$) and cations (e.g. $H^+$) created at the interface between the first and second polymers (i.e. the interface of the two polymeric domains) are separated into the individual polymeric domains immediately after their formation, preventing ion recombination. In addition, the adhesion between the first and second polymers (i.e. adhesion between the first and second polymeric domains) in the intermediate layer is extremely strong as a result of the entanglement of the first and second polymers, and the large contact area between the first and second polymers. The strong adhesion between the first and second polymers prevents/reduces the so-called ballooning effect in which large, water-filled blisters can be formed at the interface between positively and the negatively charged polymers of a BPM, where $OH^-$ and $H^+$ might recombine (undesirably) to form water. Even if some ballooning would occur it would not affect the catalytic reaction as ballooning does not occur on the interface of the first and the second polymer, but on the interface of the AEL or the CEL with the IL. Preferably the polymeric domains are not encapsulated, not isolated, not discontinuous and are non-fibrillar (e.g. not made by electrospinning).

In the present invention the intermediate layer preferably comprises a porous support and the first polymer is present within the porous structure of this support. Preferably the first polymer comprises a network of pores and the second polymer is present within those pores (thereby providing the co-continuous polymeric network, e.g. two polymeric domains of which one bears anionic charges and the other cationic charges).

The first polymer is preferably obtainable by curing a third curable composition comprising:

(a3) 15 to 75 wt% of a curable compound comprising at least two polymerisable groups and an ionic group or a precursor of an ionic group;
(b3) 0 to 25wt% of a curable compound comprising at least two polymerisable groups and being free from ionic groups;
(c3) 0 to 60 wt% of a curable compound having one polymerisable group and an ionic group or a precursor of an ionic group;
(d3) 0 to 10 wt% of radical initiator; and
(e3) 20 to 85 wt% of solvent.

Precursors of an ionic group include amino groups (to form cationic groups), ester groups, anhydride groups and acyl chloride groups (to form anionic groups).

Examples include: $C_{1-4}$-alkyl amino, methyl-, ethyl- and tert-butyl-carboxylate, methyl-, ethyl- and tert-butyl-sulphonate and sulphonate chloride.

If the curable compound comprises a precursor of an ionic group, the compound may be transferred into an ionically charged compound by hydrolysis (to form an anionically charged compound) or by alkylation (to form a cationically charged quaternary ammonium group).

Components (a3), (b3) and (c3) are preferably as defined above for (a1), (b1) and (c1) or (a2), (b2) and (c2) respectively, depending on the charge of the ionic groups present in component (a3) and/or components (b3) and (c3) (when present).

Components (d3) and (e3) are preferably as defined above for components (d1) and (e1) respectively.

The amount of component (a3) is preferably 20 to 75wt%, especially 25 to 70wt%, more especially 30 to 70wt%.

The amount of component (c3) is preferably 0 to 30wt%, especially 0 to 20wt%.

The amount of component (d3) is preferably 0 to 2wt%, more preferably - for curing by UV or visible light- 0.001 to 2wt%, especially 0.005 to 0.9wt%.

The amount of component (e3) is preferably 20 to 80wt%, especially 20 to 75wt%, more especially 25 to 70wt%.

In a preferred embodiment the composition does not contain component (b3).

Preferably the amount of components (a3) + (b3) + (c3) + (d3) + (e3) add up to 100wt%.

In a preferred embodiment the fourth curable composition used to prepare the second polymer is identical to the first or second curable composition such that the second polymer has a charge opposite to the charge of the first polymer. For example, when the ionic groups in components of the third composition are cationic then one may use the first curable composition as the fourth composition because its ionic components comprise anionic groups. Similarly, when the ionic groups in components of the third composition are anionic then one may use the second curable composition as the fourth composition because its ionic components comprise cationic groups. In this way one may obtain a BPM in which the second polymer has an identical chemical composition to the CEL or AEL, depending on the charge of the first polymer, and has a charge opposite to the charge of the first polymer.

In another preferred embodiment the fourth curable composition used to prepare the second polymer has a different chemical composition than the first or second curable composition allowing for more freedom to optimize the intermediate layer. In this embodiment the second polymer is preferably obtainable by a process comprising curing a fourth curable composition comprising:

(a4) 10 to 88 wt% of a curable compound comprising at least two polymerisable groups and an ionic group of charge opposite to the curable compound present in the third curable composition;
(b4) 0 to 25wt% of a curable compound comprising at least two polymerisable groups and being free from ionic groups;
(c4) 0 to 60 wt% of a curable compound having one and only one polymerisable group and an ionic group of charge opposite to the curable compound present in the third curable composition;
(d4) 0 to 10 wt% of radical initiator; and
(e4) 0 to 55 wt% of solvent.

Components (a4) and (c4) are preferably as defined above for (a1) and (c1), or (a2) and (c2) respectively, depending on the charge of the ionic groups present in component (a4) and/or component and (c4) (when present).
Component (b4) is preferably as defined above for component (b1), or as defined above for component (b2), depending on the charge of the ionic groups present in component (b4) when present.
The amount of component (a4) is preferably 10 to 70wt%, more preferably 15 to 65wt%.
The amount of component (c4) is preferably 0 to 30wt%, especially 0 to 20wt%.
Components (d4) and (e4) are preferably as defined above for components (d1) and (e1) respectively.
The amount of component (d4) is preferably 0 to 2wt%, more preferably - for curing by UV or visible light- 0.001 to 2wt%, especially 0.005 to 0.9wt%.
The amount of component (e4) is preferably 0 to 40 wt%, more preferably 10 to 40 wt%, most preferably 15 to 35 wt%.
In a preferred embodiment the composition does not contain component (b4).
Preferably the amount of components (a4) + (b4) + (c4) + (d4) + (e4) add up to 100wt%.
In a preferred embodiment the ionic group in components (a4) and (c4), when present, is an anionic group (and hence the ionic group in components (a3) and (c3) (when present) is a cationic group). In this embodiment the fourth curable composition preferably comprises a catalyst, preferably a cationically charged catalyst such as a metal ion. In another embodiment the ionic group in components (a4) and (c4), when present, is a cationic group (and hence the ionic group in components (a3) and (c3) (when present) is an anionic group).
As examples of porous supports which may be included in the CEL, AEL and/or the intermediate layer there may be mentioned woven and non-woven synthetic fabrics and extruded films. Examples include wetlaid and drylaid non-woven material, spunbond and meltblown fabrics and nanofiber webs made from, e.g. polyethylene, polypropylene, polyacrylonitrile, polyvinyl chloride, polyphenylenesulphide, polyester, polyamide, polyaryletherketones such as polyether ether ketone and copolymers thereof. Porous supports may also be porous membranes, e.g. polysulphone, polyethersulphone, polyphenylenesulphone, polyphenylenesulphide, polyimide, polyethermide, polyamide, polyamideimide, polyacrylonitrile, polycarbonate, polyacrylate, cellulose acetate, polypropylene, poly(4-methyl 1-pentene), polyinylidene fluoride, polytetrafluoroethylene, polyhexafluoropropylene and polychlorotrifluoroethylene membranes and derivatives thereof.
Preferably the porous support(s), when present, each independently have an average thickness of between 10 and 400μm, more preferably between 20 and 150μm, e.g. between 30 and 120μm, and especially between 20 and 100μm, e.g. between 50 and 100μm.
Preferably the porous support(s), when present, have a porosity of between 30 and 95%. The porosity of a support may be calculated from thickness and weight ($g/m^2$) and fiber density ($g/m^3$) data.
One or more of the porous supports may be treated to modify its surface energy, e.g. to values above 45 mN/m, preferably above 55mN/m. Suitable treatments include corona discharge treatment, plasma glow discharge treatment, flame treatment, ultraviolet light irradiation treatment, chemical treatment or the like, e.g. for the purpose of improving the wettability of and the adhesiveness to the porous support.
Commercially available porous supports are available from a number of sources, e.g. from Freudenberg Filtration Technologies (Novatexx materials), Lydall Performance Materials, Celgard LLC, APorous Inc., SWM (Conwed Plastics, DelStar Technologies), Teijin, Hirose, Mitsubishi Paper Mills Ltd and Sefar AG.
In a preferred embodiment of the BPM according to the first aspect of the present invention the AEL, the CEL and the intermediate layer each comprise a porous support.
Optionally the BPM comprises a catalyst. The catalyst or a precursor thereof may be included in one or more of the first curable composition for the CEL, the second curable composition for the AEL, the third curable composition for the first polymer and the fourth curable composition for the second polymer. Also possible is to apply the catalyst or a precursor thereof (e.g. as a post-treatment step) to the first polymer i.e. after curing the third curable composition) using, for example, (but not limited to), dipping, air knife coating, microroller coating, spraying, chemical (vapour) deposition or physical (vapour) deposition. In this embodiment the catalyst is present at the interface between the first and the second polymer and may assist with the WDR. In a preferred embodiment the intermediate layer comprises a catalyst.
Examples of suitable catalysts include metal salts, metal oxides, organometallic compounds, monomers, polymers or co-polymers. Examples include, but are not limited to, $FeCl_3$, $FeCl_2$, $AlCl_3$, $MgCl_2$, $RuCl_3$, $CrCl_3$. $Fe(OH)_3$,

$Sn(OH)_2$, $Sn(OH)_4$, $SnCl_2$, $SnCl_4$, SnO, $SnO_2$, $Al_2O_3$, NiO, $Zr(HPO_4)_2$, $MoS_2$, graphene oxide, Fe-polyvinyl alcohol complexes, polyvinyl alcohol (PVA), polyethylene glycol (PEG), polyethyleneimine (PEI), polyacrylic acid (PAA), copolymer of acrylic acid and maleic anhydride (PAAMA) and hyperbranched aliphatic polyester. Any of these catalysts may be present in a range up to 5wt%, e.g. 0.001 wt% or 1 wt%, of the weight of the BPM.

According to a third aspect of the present invention there is provided a process for preparing a bipolar membrane (BPM) comprising an anion exchange layer (AEL), a cation exchange layer (CEL) and an intermediate layer (IL) which comprises curing of a composition according to the second aspect of the present invention.

Preferably the process comprises the following steps:

(i) providing a first, second, third and optionally a fourth curable composition as defined above;
(ii) impregnating a porous support with the third curable composition;
(iii) curing the third curable composition present within the porous support by a process comprising phase separation of a first polymer from the third curable composition, wherein the first polymer comprises ionic groups and a network of pores, thereby providing a base layer comprising the porous support and the first polymer, wherein the base layer comprises a first side and a second side opposite to the first side;
(iv) optionally contacting the first side of the base layer with the fourth curable composition such that at least a part of the fourth curable composition enters into at least a part of the pores of the first polymer;
(v) contacting the first side or the second side of the base layer with the first curable composition such that a layer of the first curable composition is provided on the first or second side of the base layer and optionally at least a part of the first curable composition enters into at least a part of the pores of the first polymer;
(vi) contacting the second side or the first side of the base layer with the second curable composition such that a layer of the second curable composition is provided on the second or first side of the base layer and optionally a part of the second curable composition enters into at least a part of the pores of the first polymer and provides a layer of the second curable composition on the second or first side of the base layer; and
(vii) curing the layers of curable composition present on each side of the base layer and present within the pores of the first polymer in any order or simultaneously to form:

a CEL comprising a first cured composition,
an AEL comprising a second cured composition, and
an IL comprising a co-continuous polymeric network of (i) the first polymer; and (ii) the second polymer having ionic groups of polarity opposite to the polarity of the ionic groups of the first polymer and being present within the network of pores of the first polymer;
wherein the IL is interposed between the CEL and the AEL.

If in the process described above the fourth curable composition comprises anionic groups in step (v) the first side of the base layer is contacted with the first curable composition. If the fourth curable composition comprises cationic groups in step (v) the second side of the base layer is contacted with the first curable composition. If step (iv) is not part of the process (the fourth curable composition is not used and the first curable composition is used as fourth curable composition) one of the first side or the second side of the base layer is contacted with the first curable composition.

In step (vi) the other of the first side or the second side of the base layer is contacted with the second curable composition. Steps (v) and (vi) may be performed in any order.

In a preferred embodiment the fourth curable composition comprises anionic groups and a catalyst.

In a preferred embodiment, the process according to the third aspect of the present invention further comprises the step (viii) of soaking the BPM in an aqueous solution of sodium chloride (e.g. NaCl solution in water at a strength of 0.1 to 1.0 moles per litre, for example 0.5M), e.g. for a period of over 5 hours (especially 6 to 24 hours, more especially 10 to 20 hours and particularly 14 to 18 hours e.g. for 16 hrs). The soaking is preferably performed at a temperature in the range 5°C to 35°C, especially 10°C to 30°C, more especially 15°C to 25°C and most preferably at room temperature (about 20°C).

In a preferred embodiment of the process according to the third aspect of the present invention, the first curable composition and the second curable composition each comprise a porous support when they are cured in step (vii).

Optionally the process according to the third aspect of the present invention further comprises the step of fully or partially hydrolysing the product of step (iii) before performing step (iv), e.g. by contacting the product of step (iii) with aqueous alkali at a temperature above 40°C during a period of time of at least 1 hour (e.g. soaking the product of step (iii) in NaOH or LiOH at a temperature in the range of 80 to 90°C for a period of 16 to 48 hours). This may be useful when one of the monomers is present in ester form. In this embodiment the third curable composition is typically anionic and the fourth curable composition is typically cationic.

In a preferred embodiment the product of step (iii) is contacted with a catalyst (preferably comprising a multivalent metal ion) before step (iv) is performed. In this way a BPM may be prepared which comprises a catalyst in layer c) at the junction between the third and fourth polymers.

In a preferred embodiment, step (ii) of the process according to the third aspect of the present invention further comprises placing the porous support impregnated with the third curable composition on a transparent foil, or between transparent foils to give a sandwich of the impregnated porous support and two foils and then squeezing the sandwich, e.g. between rollers or blades, to remove any excess of the third curable composition. After curing step (iii) the transparent foil(s) may be removed before performing step (iv). In a further preferred embodiment curing of the third curable composition in step (iii) is performed under an inert atmosphere, e.g. under nitrogen, carbon dioxide or argon gas.

As mentioned above, in a preferred embodiment the compositions are cured first by photocuring, e.g. by irradiating the compositions by ultraviolet or visible light, or by gamma or electron beam radiation, and thereby causing the curable components present in the compositions to polymerise, and then applying a second curing step. The second curing step preferably comprises thermal curing, gamma irradiation or EB irradiation whereby the second curing step preferably applies a different method than the first curing step. When gamma or electron beam irradiation is used in the first curing step preferably a dose of 60 to 120 kGy, more preferably a dose of 80 to 100 kGy is applied.

In one embodiment the process according to the third aspect of the present invention comprises curing the compositions sequentially after each curable composition is applied in a first curing step (e.g. UV curing or electron beam (EB) curing) to form a bipolar membrane, winding the bipolar membrane onto a core (optionally together with an inert polymer foil) and then performing a second curing step (e.g. thermal curing). In another embodiment the process comprises curing the compositions in a first curing step (e.g. UV curing) to form a bipolar membrane, performing a second curing step (e.g. EB curing) and then winding the polymer film onto a core (optionally together with an inert polymer foil).

In a preferred embodiment the first and second curing steps are respectively selected from (i) UV curing then thermal curing; (ii) UV curing then electron beam curing; and (iii) electron beam curing then thermal curing.

Component (d1) may comprise more than one radical initiator, e.g. a mixture of several photoinitiators (for UV curing) or a mixture of photoinitiators and thermal initiators (for UV and thermal curing). Alternatively a second curing step is performed using gamma or EB irradiation. For the second curing step by gamma or EB irradiation preferably a dose of 20 to 100 kGy is applied, more preferably a dose of 40 to 80 kGy is applied.

For the second curing step, thermal curing is preferred. The thermal curing is preferably performed at a temperature between 50 and 100°C, more preferably between 60 and 90°C. The thermal curing is preferably performed for a period between 2 and 48 hours, e.g. between 8 and 16 hours, e.g. about 10 hours. Optionally after the first curing step a polymer foil is applied to the polymer film before winding (this reduces oxygen inhibition and/or sticking of the polymer film onto itself). Optionally the second curing step is performed under an inert atmosphere, e.g. under nitrogen, carbon dioxide or argon gas.

After curing, the BPM may comprise a low amount of unreacted monomers. Preferably the BPM arising from the process according to the third aspect of the present invention comprises 0.008mg/g to 25mg/g of (unreacted) component (a1), more preferably 0.015 to 20mg/g of component (a1).

Preferably the BPM arising from the process according to the third aspect of the present invention comprises 0.008 to 25mg/g, more preferably 0.015 to 20 mg/g of (unreacted) component (b1).

The BPMs of the present invention may be used for various applications, including acid and base production/-purification, $CO_2$ capture, energy conversion and storage, wastewater treatment, pH-control, removal of $SO_2$ from flue gas, recycling of HF and $HNO_3$, and recovering of organic acids. The BPMs of the present invention have good durability in acidic and basic media, low swelling, and may be produced cheaply, quickly and efficiently.

According to a further feature of the present invention there is provided a bipolar electrodialysis device comprising an anion exchange membrane and/or a cation exchange membrane, and a BPM according to the first aspect of the present invention.

The invention will now be illustrated by the following, non-limiting examples in which all parts and percentages are by weight unless specified otherwise.

## Examples

### Determining the performance of the BPMs

A bipolar electrodialysis device (as illustrated in FIG. 1) ("the BE device") was constructed for testing the performance of the BPMs according to the present invention vs. commercially available, reference BPMs.

In the BE device an aqueous solution of NaCl (10wt%) was used as feed solution, and 0.5 M sodium sulphate was used as electrolyte. 2M HCl and 2M NaOH were used as acid solution (acid tank) and base solution (base tank) respectively.

The feed solution, acid solution and base solution (at 25°C) were supplied at a flow rate of 35L/min respectively, corresponding to a flow velocity of 5.7 cm/s. A current of 12A was applied across the electrodes of the BE device for 2 hours and during this period the voltage was recorded. The average value was taken as operating voltage.

Concentration and purity determination

The concentration of acid and base in the acid and base tanks of the BE device were measured by titration. The quantity of anionic impurities and cationic impurities present in the acid and base were measured using ion chromatography and Inductively Coupled Plasma (ICP) analysis respectively.

The purity of the acid and base were calculated using the following formulae.

$$\text{Acid purity (\%)} = (1- (\Delta[Na^+] / [H^+])) \times 100\%;$$

wherein:

$\Delta[Na^+]$ is the increase in the concentration of sodium ions in the acid tank during the test in mol/L; and
$[H^+]$ is the hydrogen ion concentration in the acid tank after the test in mol/L.

$$\text{Base purity (\%)} = (1 - ((\Delta[Cl^-] + \Delta[SO_4^{2-}]) / [OH^-])) \times 100\%;$$

wherein:

$\Delta[Cl^-]$ is the increase in concentration of chloride ions in the base tank during the test in mol/L;
$\Delta[SO_4^{2-}]$ is the increase in concentration of sulphate ions in the base tank during the test in mol/L; and
$[OH^-]$ is the hydroxide ion concentration in the base tank after the test in mol/L.

Leak current measurement method

The leak currents of the BPMs under test were determined using a 6-chamber test cell equipped with a 1st electrode compartment containing a platinum plate as cathode and separated from the 2nd compartment by a standard cation exchange membrane (CMX from Astom). The electrode compartment was filled with 0.5 M $Na_2SO_4$. An AMX membrane (from Astom) was placed between the 2nd and the 3rd compartment and a CMX membrane from Astom between the 4th and the 5th compartment. Both the 2nd and the 3rd compartment contained a 15wt% NaCl solution. The BPM to be tested was placed between the 3rd and 4th compartment. A standard cation exchange membrane (CMX from Astom) was placed between the 5th and the 6th compartment. The 4th and 5th compartments were filled with a 15wt% NaCl solution. The 6th compartment containing a platinum plate as anode formed an electrode compartment and contained 0.5 M $Na_2SO_4$. The solutions were pumped through the compartments of the 6-chamber test cell at a temperature of 25°C, while a constant voltage of 0.4 V was applied. The flow rate of the solution through the 3rd and 4th compartments was 235 mL/min, corresponding to a refreshing rate of 12 s. The BPMs were placed with the AEL side towards the anode and with the CEL side towards the cathode. The current was measured by using a Haber-Luggin capillary placed at each side of the BPM under test at a distance of 4.5 mm. The data were acquired every 5 seconds for a period of 300 seconds to ensure that the current had stabilized. The current leak value obtained was the average of the last 5 data points of the current (after it had reached a steady state). Prior to the measurement, all samples were conditioned in 0.5 M NaCl solution. Preferably the leak current is as low as possible.

Determination of the amount of component (a1) and (b1) in BPMs

The amount of unreacted component (a1) and (b1) remaining in the BPMs was determined by HPLC using a Waters Acquity UPLC equipped with a PDA detector at 254 nm fitted with a Waters Xbridge C8 150 mm 4.6 mm column. The amounts form a good indication whether the BPMs were cured correctly. The determination was performed as follows: a circular sample of the BPM under test (5.7 cm diameter, 25.52 $cm^2$ area) was shaken overnight (16hr), at room temperature (20°C), in ethanol (50 ml). The ethanol was then removed, filtered to remove solids using a 25 mm syringe filter (RC, 0.45μm pore size from BGB Analytik) and the quantity of (unpolymerised) components (a1) and (b1) present in the ethanol was measured by HPLC. The HPLC analysis used 5 point calibration lines made from 10 to 500 mg/l for each of the components (a1) and (b1) used to make the BPM under test. The eluant was a mixture of water and methanol, each containing 0.1wt% of acetic acid, applied as a gradient as indicated in Table 1 below.

Table 1: Eluant Gradient:

| Time [min] | Flow [ml/min] | Water [%] | Methanol [%] |
|---|---|---|---|
| Initial | 0.5 | 95.0 | 5.0 |

(continued)

| Time [min] | Flow [ml/min] | Water [%] | Methanol [%] |
|---|---|---|---|
| 1.20 | 0.5 | 95.0 | 5.0 |
| 30.00 | 0.5 | 21.5 | 78.5 |
| 36.00 | 0.5 | 0.0 | 100.0 |
| 39.60 | 0.5 | 0.0 | 100.0 |
| 39.72 | 0.5 | 95.0 | 5.0 |
| 43.20 | 0.5 | 95.0 | 5.0 |

Process for making the BPMs

The materials used to make the BPMS were as shown in Table 2 below:

Table 2: Materials

| Abbreviation | Component Type | Description |
|---|---|---|
| MM-M | (c1,c4) | Benzenesulphonamide, 4-ethenyl-N-(methylsulphonyl)-, lithium salt |
| XL-D | (a1,a4) | Benzenesulphonamide, 2,4-diethenyl-N-(methylsulphonyl)-, lithium salt |
| XL-2 | (a1,a4) | 1,3-[N-(ethenylphenylsulphonyl)benzene sulphonamide], dilithium salt |
| XL-B | (a1,a4) | Lithium bis(4-vinylbenzenesulphonyl)imide |
| DVB | (b1,b4) | Divinyl benzene from Sigma Aldrich |
| 4OH-TEMPO | inhibitor | 4-hydroxy-2,2,6,6-tetramethylpiperidin-1-oxyl, a polymerisation inhibitor from Sigma-Aldrich |
| Omnirad™ TPO-L | (d1,d2,d3,d4) | 2,4,6-Trimethylbenzoyldi-Phenylphosphinate from IGM Resins |
| DAA | (e1,e4) | Diacetone alcohol from Sigma Aldrich |
| MeOH | (e1,e4) | Methanol from Sigma-Aldrich |
| 1MP | (e1,e4) | 1-methyl pyrrole from Sigma-Aldrich |
| water | (e1,e2,e3,e4) | Purified water |
| VBTMAC | (c2) | 4-Vinylbenzyl trimethylammonium chloride from Sigma-Aldrich |
| XL-A1 | (a2) | 1,4-bis[(ethenylphenyl)methyl]-1,4-diazoniabicyclo[2.2.2]octane, dichloride |
| XL-A2 | (a2/a3) | N,N,N',N'-tetramethyldiaminopropane, 1,4-bis[(4-ethenylphenyl)methyl]-, chloride |
| LAP | (d1,d3) | Phenyl-2,4,6-trimethylbenzoylphosphinate, lithium salt from Sigma-Aldrich |
| Irgacure® 1173 | (d2,d3) | 2-Hydroxy-2-methyl propiophenone from BASF |
| V-59 | (d1,d4) | 2,2'-Azobis(2-methylbutyronitrile) from Fujifilm Wako Chemicals |
| V-601 | (d1,d4) | Dimethyl 2,2'-azobis(2-methylpropionate) from Fujifilm Wako Chemicals |
| S1 | Porous support | PP/PE porous support of thickness 60 μm, porosity 63.8% and 50 gsm |
| S2 | Porous support | PP/PE porous support of thickness 80 μm, porosity 64.7% and 15 gsm |
| S3 | Porous support | PP/PE porous support of thickness 60 μm, porosity 72.8% and 50 gsm |

Synthesis of MM-M

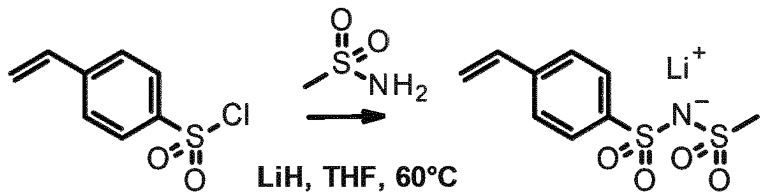


Before the synthesis, methane sulphonamide was dried in a vacuum oven overnight at 30°C. To a solution of the dried methane sulphonamide (0.100 mol, 1 moleq) and 4OH-TEMPO (30 mg, 500 ppm) in tetrahydrofuran (THF) (100 mL) was added lithiumhydride (LiH) (0.300 mol, 3 moleq) as a solid at once. The reaction mixture was stirred for 30 minutes at room temperature. Then, a solution of vinyl benzyl sulphonyl chloride (Cl-SS) (0.100 mol, 1 moleq) in THF (50 mL) was added and the reaction mixture was heated to 60°C (water bath temperature) for 16h. The resulting solution was filtrated over celite and the resulting foam was dissolved in 500 mL ethyl acetate. Celite was added and the resulting slurry was stirred for 5 minutes. Then, the celite was filtered off and washed with 100 mL ethyl acetate. The solvent was then evaporated under vacuum and the resulting white foam was crushed in 500 mL diethyl ether and stirred overnight. The resultant product was collected by filtration and isolated as a white hygroscopic powder (yield was 80%, purity >94%).

Cl-SS

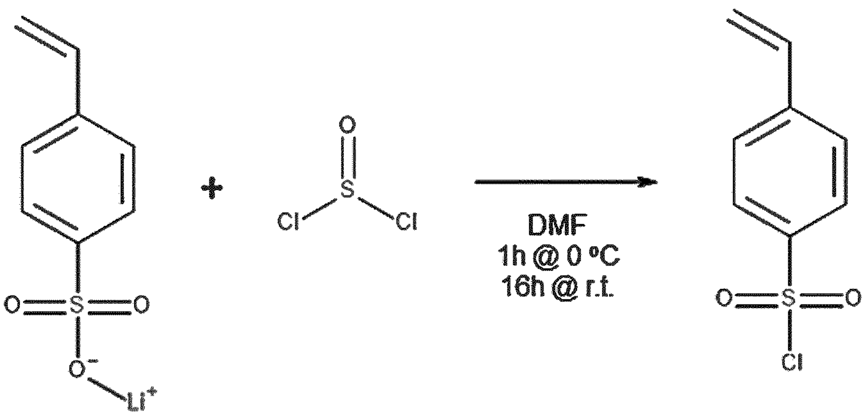


Thionyl chloride (109 mL, 178.46 g, 1.5 mol, 3 moleq) was added dropwise to a solution of 4-vinylbenzenesulphonic acid lithium salt (95.08 g, 0.500 mol, 1 moleq) and 4OH-TEMPO (50 mg, 500 ppm) in dimethylformamide (DMF) (300 mL) in a double-walled reactor that was actively cooled to 5°C. After the addition was completed, the solution was allowed to slowly heat to room temperature and was stirred for another 16 hours. Then the reaction mixture was poured into 1 liter of cold 1M KCl in a separation funnel. The bottom layer was removed and dissolved in 500 mL diethylether. This solution was washed with a 1M KCl-solution (300 mL). The organic layer was dried over sodium sulphate, filtered and concentrated under vacuum to give a yellow oil. The crude product was used without further purification in the next step. Typical yield was 89.5 g (88%). HPLC-MS purity > 98%; $^1$H-NMR: <2 wt% DMF, 0% diethyl ether.

Cl-DVBS

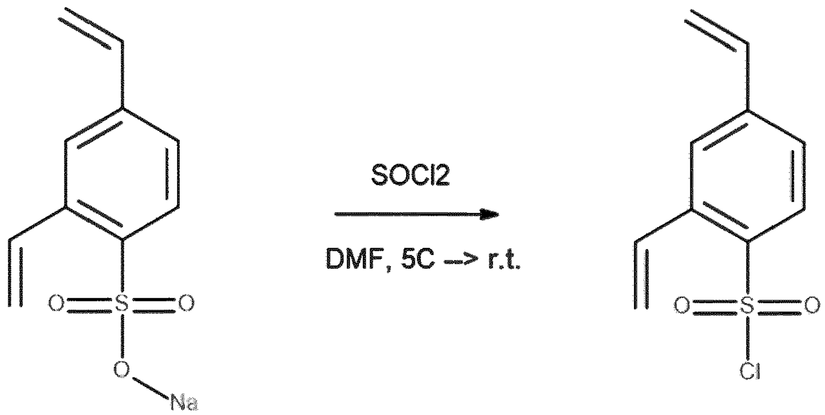


Thionyl chloride (75 mL, 123.1 g, 1.034 mol, 3 moleq) was added dropwise to a solution of divinylbenzene sulphonate sodium salt (80 g, 0.345 mol, 1 moleq) and 4OH-TEMPO (50 mg, 500 ppm) in DMF (300 mL) in a double-walled reactor that was actively cooled to 5°C. After the addition was completed, the solution was allowed to slowly heat to room temperature and was stirred for another 16 hours. Then the reaction mixture was poured into 1 liter of cold 1M KCl in a separation funnel. The bottom layer was removed and dissolved in 500 mL diethylether. This solution was washed with a 1M KCl-solution (300 mL). The organic layer was dried over sodium sulphate, filtered and concentrated in vacuo to give a yellow oil. The crude product was used without further purification in the next step. Typical yield was 62 g (79%). HPLC-MS purity > 98%; $^1$H-NMR: <2 wt% DMF, 0% diethyl ether.

<u>NH2-SS</u>

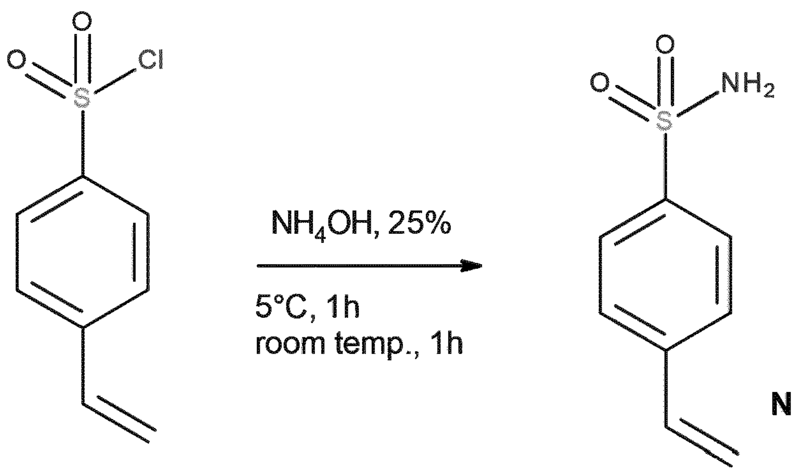


**NH2-SS**

Thionyl chloride (109 mL, 178.46 g, 1.5 mol, 3 moleq) was added dropwise to a solution of 4-vinylbenzene-sulphonic acid lithium salt (95.08 g, 0.500 mol, 1 moleq) and 4OH-TEMPO (50 mg, 500 ppm) in DMF (300 mL) in a double-walled reactor that was actively cooled to 5°C. After the addition was completed, the solution was allowed to slowly heat to room temperature and was stirred for another 16 hours. Then the reaction mixture was poured into 1 liter of cold 1M KCl in a separation funnel. The bottom layer was removed and was added dropwise to a solution of 25% ammonium hydroxide in water (250 mL, 3.67 mol, 15 moleq) and 4OH-TEMPO (50 mg, 500 ppm) in a double-walled reactor that was actively cooled to 5°C. After the addition was completed, the solution was stirred for 1 hour. The solution was then allowed to heat to room temperature and was stirred for one hour. Then the reaction mixture was cooled back to 5°C and the product was filtered off and washed with 50 mL of cold water. The product was dried overnight under vacuum at 30°C and used without further purification. Typical yield was 66.8 g (73%). HPLC-MS purity > 95%.

<u>XL-B</u>

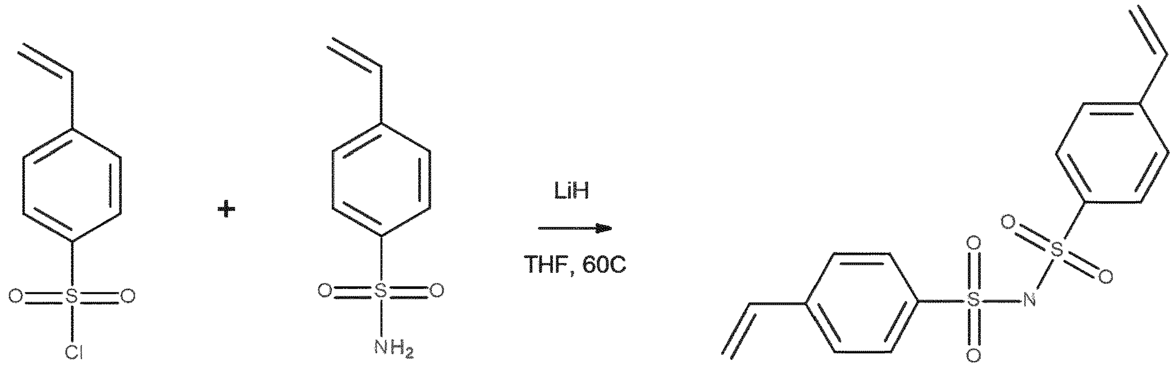


Before the synthesis, vinylbenzene sulphonamide (NH2-SS) was dried in a vacuum oven overnight (30°C, vac). To a solution of the dried vinylbenzene sulphonamide (11.12 g, 0.061 mol, 1 moleq) and 4OH-TEMPO (30 mg, 500 ppm) in THF (100 mL) was added LiH (1.06 g, 0.134 mol, 2.2 moleq) as a solid at once. The reaction mixture was stirred for 30 minutes at room temperature. Then, a solution of Cl-SS (12.3 g, 0.061 mol, 1 moleq) in THF (50 mL) was added to the reaction mixture. After addition, the reaction mixture was heated to 60°C (water bath temperature). After two days, the reaction mixture was filtrated over celite to remove the excess of LiH. Celite was added to the reaction mixture and the resulting slurry was stirred for 5 minutes. Then, the celite was filtered off and washed with 100 mL ethyl acetate. The solvent was then evaporated in vacuo and the resulting white foam was washed with 500 mL diethyl ether overnight. The resulting white powder was filtered off and dried in a vacuum oven at 30°C for 16h yielding a white solid. Typical yield was 11 g (51%). HPLC-MS purity > 94%; $^{1}$H-NMR:<1 wt% residual solvents, <5 wt% styrene sulphonate or styrene sulphonamide; ICP-OES: 21-26 g Li/kg product.

<u>XL-D</u>

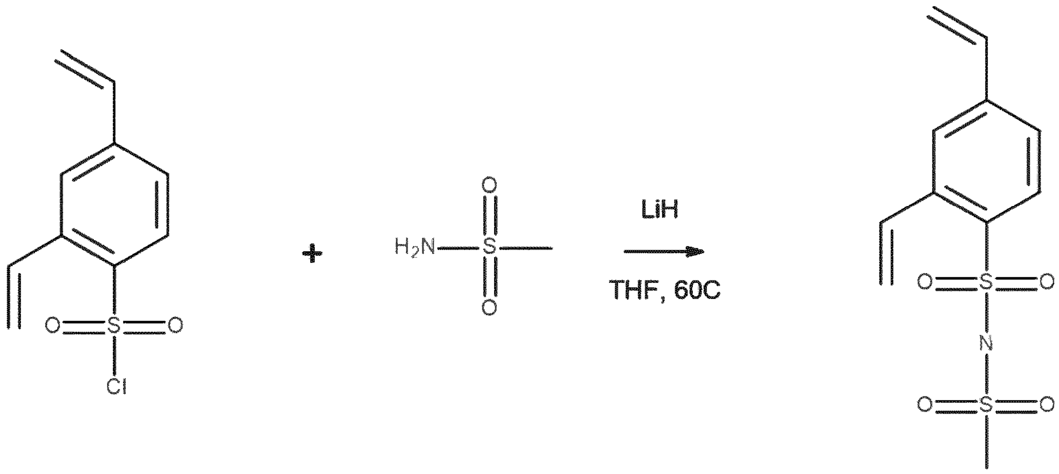


Before the synthesis, methane sulphonamide was dried in a vacuum oven overnight (30°C, vac). To a solution of the dried methane sulphonamide (8.32 g, 0.087 mol, 1 moleq) and 4OH-TEMPO (30 mg, 500 ppm) in THF (100 mL) was added LiH (1.53 g, 0.192 mol, 2.2 moleq) as a solid at once. The reaction mixture was stirred for 30 minutes at room temperature. Then, a solution of Cl-DVBS (20 g, 0.087 mol, 1 moleq) in THF (50 mL) was added to the reaction mixture. After addition, the reaction mixture was heated to 60°C (water bath temperature). After two days, the reaction mixture was filtrated over celite to remove the excess of LiH. The filtrate was concentrated in vacuo to give a light-yellow foam. The resulting foam was dissolved in 500 mL ethyl acetate to which celite was added and the resulting slurry was stirred for 5 minutes. Then, the celite was filtered off and washed with 100 mL ethyl acetate. This celite procedure was then repeated. The solvent was then evaporated in vacuo and the resulting white foam was washed with 500 mL diethyl ether overnight. The resulting white powder was filtered off and dried in a vacuum oven at 30°C for 16h yielding a hygroscopic white solid. Typical achieved yield wa 15.5 g (60%). HPLC-MS purity > 95%; $^{1}$H-NMR: <3 wt% residual solvents; 2wt% divinylbenzene sulphonate; ICP-OES: 24-30 g Li/kg product.

Synthesis of XL-2

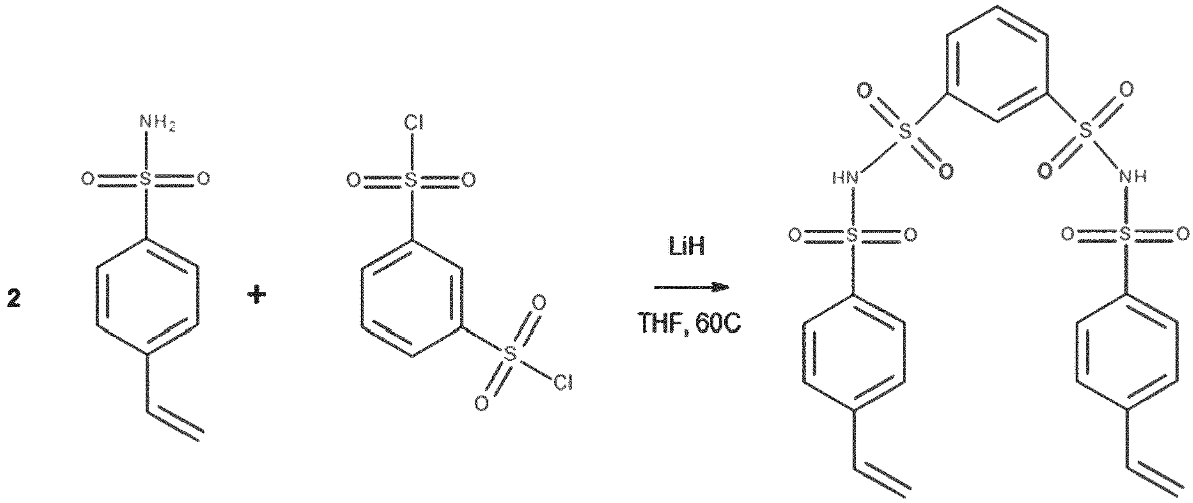


Before the synthesis, vinylbenzene sulphonamide (NH2-SS) was dried in a vacuum oven overnight (30°C, vac). To a solution of the dried vinylbenzene sulphonamide (16.90 g, 0.092 mol, 2.05 moleq) and 4OH-TEMPO (30 mg, 500 ppm) in THF (100 mL) was added LiH (1.50 g, 0.189 mol, 4.2 moleq) as a solid at once. The reaction mixture was stirred for 30 minutes at room temperature. Then, a solution of 1,3-benzene disulphonyl chloride (12.38 g, 0.045 mol, 1 moleq) in THF (50 mL) was added to the reaction mixture. After addition, the reaction mixture was heated to 60°C (water bath temperature). After 2 days, the reaction mixture was filtrated over celite to remove the excess of LiH. The filtrate was concentrated in vacuo to give a light-yellow foam. The resulting foam was dissolved in 500 mL ethyl acetate to which celite was added and the resulting slurry was stirred for 5 minutes. Then, the celite was filtered off and washed with 100 mL ethyl acetate. This celite procedure was then repeated. The solvent was then evaporated in vacuo and the resulting white foam was washed with 500 mL diethyl ether overnight. The resulting white powder was filtered off and dried in a vacuum oven at 30°C for 16h yielding a hygroscopic white solid. Typical achieved yield is 14.5 g (54%). HPLC-MS purity > 96%; $^{1}$H-NMR: <2 wt% residual solvents; <2 wt% styrene sulphonamide; ICP-OES: 35-40 g Li/kg product.

Synthesis of XL-A1 and of XL-A2 is described in EP2979748-A1 on page 21 as Synthesis Example 1 (CL-1) and Synthesis Example 2 (CL-8) respectively.

1) Providing the First Curable Compositions for preparing CELs:

First curable compositions CC1 to CC5 were provided by mixing the ingredients indicated in Table 3 below:

Table 3 - First curable compositions (used for preparing CELs)

| Component (wt%) | CC1 | CC2 | CC3 | CC4 | CC5 |
|---|---|---|---|---|---|
| MM-M | 25 | | | | |
| XL-2 | 35 | | 68.4 | | |
| XL-B | | | | 62.79 | 42 |
| XL-D | | 66 | | | |
| DAA | | | 6 | 6 | 10 |
| DVB | | | 2.6 | 11.72 | 28 |
| 4OH-TEMPO (2wt% in water) | 1 | 1 | 1 | 1 | 1 |
| Omnirad™ TPO-L | 0.5 | 0.5 | 0.5 | 0.5 | 0.5 |
| V-59 | | | | | 1 |
| LAP | 0.5 | 0.5 | 0.5 | 0.5 | 0.5 |
| V-601 | | | 1 | 1 | |

(continued)

| Component (wt%) | CC1 | CC2 | CC3 | CC4 | CC5 |
|---|---|---|---|---|---|
| water | 28 | | 20 | 16.49 | 17 |
| MeOH | | 32 | | | |
| 1MP | 10 | | | | |
| Total | 100 | 100 | 100 | 100 | 100 |
| Molar amount a1 | | | 0.12 | 0.18 | 0.12 |
| Molar amount b1 | | | 0.02 | 0.09 | 0.22 |
| molar ratio a1/b1 | | | 5.89 | 1.96 | 0.55 |

The first curable compositions were also used as fourth curable compositions.

2) Providing the Second Curable Compositions (for preparing AELs):

Second curable compositions CC6 and CC7 were provided by mixing the ingredients indicated in Table 4 below:

Table 4: Second curable compositions (for preparing AELs)

| Component (wt%) | CC6 | CC7 |
|---|---|---|
| VTBMAC | 23 | 23 |
| XL-A1 | 0 | 46.1 |
| XL-A2 | 46.1 | 0 |
| 4OH-TEMPO (2wt% in water) | 2 | 2 |
| Omnirad™ TPO-L | 0.45 | 0.45 |
| Irgacure® 1173 | 0.45 | 0.45 |
| water | 28 | 28 |
| Total | 100 | 100 |

3) Providing the Third Curable Composition (for preparing the porous first polymer):

Third curable composition CC8 was provided by mixing the ingredients indicated in Table 5 below:

Table 5: Third curable composition (for preparing the porous polymer)

| Component (wt%) | CC8 |
|---|---|
| water | 65 |
| 4 OH-TEMPO (2wt% in water) | 1 |
| NaCl | 0.1 |
| XL-A2 | 32.7 |
| LAP | 0.6 |
| Irgacure® 1173 | 0.48 |
| Omnirad™TPO-L | 0.12 |
| Total | 100 |

4) Preparation of the First Polymer

A 100 μm thick layer of the third curable composition CC8 was applied to a transparent PET foil sheet using a

Mayer bar. A porous support (S3) was applied to the layer of the third curable composition, thereby becoming impregnated with the third curable composition. A second transparent PET foil sheet was applied to the impregnated porous support to provide a sandwich of the impregnated porous support between the two transparent foils. Gently all air was squeezed out of the porous support using a roller. The sandwich of the impregnated porous support between the two transparent foils was irradiated using a Light Hammer LH10 from Fusion UV Systems fitted with a D-bulb working at 60% intensity at a speed of 5 m/min in order to cure the third curable composition present in the porous support thereby phase-separating and forming a porous polymer structure. After curing, the transparent PET foils were removed, and the cured product was allowed to dry in the air at room temperature to give a base layer (i.e. porous support S3 comprising the porous first polymer comprising cationic groups) having a first side and a second side.

5) Functionalisation of the Base Layer with Catalyst

Catalyst solution CS1 was prepared by mixing the following ingredients:

Table 6: Catalyst solution

| Materials (wt%) | CS1 |
|---|---|
| PW | 78.65 |
| $SnCl_2.2H_2O$ | 1.35 |
| 0.05 N HCl | 20 |
| Total | 100 |

The base layer from step 4) above (comprising the porous first polymer) was dipped in catalyst solution CS1 and allowed to dry at room temperature. Subsequently the base layer was dipped in a 0.12N NaOH solution to precipitate the catalyst in the pores of the first polymer and was then allowed to dry at room temperature to give functionalized base layer FBL1.

6) Preparation of the BPMs

The BPMs of Comparative Examples CEx.3 to CEx.5 and Examples Ex.1 to Ex.6 were prepared from the functionalized base layer FBL1 arising from step 5) (comprising catalyst) and the porous supports, first curable compositions and second curable compositions indicated in Table 7 below. The detailed preparation method is described below Table 7:

Table 7: BPM layer composition

| Example | First Curable composition (to prepare the CEL) | Porous Support used in the CEL | Second Curable composition (to prepare the AEL) | Porous Support used in the AEL |
|---|---|---|---|---|
| CEx.3 | CC1 | S1 | CC6 | S1 |
| CEx.4 | CC2 | S1 | CC6 | S1 |
| CEx.5 | CC5 | S1 | CC6 | S1 |
| Ex.1 | CC3 | S1 | CC6 | S1 |
| Ex.2 | CC4 | S1 | CC6 | S1 |
| Ex.3 | CC3 | S1 | CC7 | S1 |
| Ex.4 | CC4 | S2 | CC6 | S2 |
| Ex.5 | CC4 | S3 | CC7 | S1 |
| Ex.6 | CC4 | S2 | CC7 | S2 |

The BPMs of Comparative Examples CEx.3 to CEx.5 and Examples Ex.1 to Ex.6 described in Table 7 above were prepared as follows: The first curable composition (for the CEL) was applied to a transparent PET foil using a 100 $\mu$m Mayer bar. The porous support for the CEL indicated in Table 7 above was placed on the layer of first curable composition. Then the functionalized base layer FBL1, prepared as described in step 5) above, was placed on top of the layer of first

curable composition with the first side of the FBL1 contacting the first curable composition whereupon at least a part of the first curable composition entered into the pores of the first polymer (inside FBL1). This gave a base layer impregnated with the first curable composition and provided a layer of the first curable composition on the first side of the base layer.

The base layer impregnated with the first curable composition and having a layer of the first composition on its first side was irradiated on the second side thereof (i.e. the side without the first curable composition) using a Light Hammer LH10 from Fusion UV Systems fitted with a D-bulb working at 50% intensity at a speed of 5 m/min. The resultant cured film was a laminate of the CEL and the intermediate layer in which the pores of the first polymer were filled with the cured first curable composition.

A 100 μm layer of the second curable composition (for the AEL) was applied to the second side of the laminate of CEL and intermediate layer using a Mayer bar and a second porous support (for the AEL, as specified in Table 7) was applied to the layer of the second curable composition. After 5 seconds excess second curable composition was removed using a 4 μm Mayer bar.

The resulting product was irradiated on both sides using a Light Hammer LH10 from Fusion UV Systems fitted with a D-bulb working at 50% intensity at a speed of 5 m/min in order to cure the second curable composition. A second curing step was performed by placing the BPM sample, packed in a sealed plastic bag and vacuumized, in an oven set at 90°C for 3 hours. Finally, the PET foil was removed to give the BPM comprising the CEL, the AEL and the intermediate layer located between the CEL and the AEL.

7. BPM Test Results

As can be seen from Table 8 below, the purity of acid obtained from the BE devices comprising BPMs from the Examples and Comparative Examples were all high (99% and above)However, purity of base obtained from the BE devices comprising BPMs according to the present invention was better than for BE devices comprising BPMs from the Comparative Examples (as also confirmed by the low leak current measurements for the BPMs of the Examples compared to the BPMs of the Comparative Examples).

Table 8: Results

| Example | Molar ratio of component (a1):(b1) in the composition | CEL layer thickness (um) | Leak current at 0.4 V, 25°C ($A/m^2$) | Purity acid channel (%) | Purity base channel (%) |
|---|---|---|---|---|---|
| CEx.1 | n.a. | | 38.4 | 99.4 | 97.4 |
| CEx.2 | n.a. | | 40.2 | 99.3 | 97.3 |
| CEx.3 | n.a. | 72 | 45.0 | 99.7 | 97.0 |
| CEx.4 | n.a. | 74 | 78.3 | 99.4 | 94.3 |
| CEx.5 | 0.55 | 74 | 73.5 | 99.6 | 94.7 |
| Ex.1 | 5.89 | 73 | 26.3 | 99.5 | 98.8 |
| Ex.2 | 1.96 | 73 | 14.0 | 99.7 | 99.6 |
| Ex.3 | 5.89 | 75 | 10.0 | 99.7 | 99.7 |
| Ex.4 | 1.96 | 94 | 20.7 | 99.4 | 99.1 |
| Ex.5 | 1.96 | 76 | 13.5 | 99.6 | 99.5 |
| Ex.6 | 1.96 | 97 | 3.0 | 99.9 | 99.8 |
| n.a. = not applicable | | | | | |

CEx.1 and CEx.2 are commercially available BPMs.

To evaluate the thickness of the CEL, the sample was cut by hand using a razor blade to obtain a cross-section. The thickness of the CEL was then measured using optical microscopy. The CEL was measured at three different locations, from which the average was calculated.

Table 9: Amount of (unreacted) monomers remaining in the BPM

| Example | Component (a1) content (mg/g) in the BPM | Component (b1) content (mg/g) in the BPM |
|---|---|---|
| CEx.1 | n.a. | n.a. |

(continued)

| Example | Component (a1) content (mg/g) in the BPM | Component (b1) content (mg/g) in the BPM |
|---|---|---|
| CEx.2 | n.a. | n.a. |
| CEx.3 | 2.4 | n.a. |
| CEx.4 | 2.1 | n.a. |
| CEx.5 | 2.5 | 1.6 |
| Ex.1 | 1.6 | 2.5 |
| Ex.2 | 1.6 | 2.4 |
| Ex.3 | 2.0 | 2.7 |
| Ex.4 | 2.2 | 3.0 |
| Ex.5 | 2.2 | 2.8 |
| Ex.6 | 2.3 | 2.6 |
| n.a. means not applicable because one or both components are not present. | | |

In Table 9 the amounts of unreacted monomers still present in the BPM sample after preparation are shown.

## Claims

1. A bipolar membrane (BPM) comprising an anion exchange layer (AEL) and a cation exchange layer (CEL), wherein the cation exchange layer is obtainable by curing a composition comprising:

   (a1) a first crosslinking agent comprising an anionic group and at least two polymerisable groups;
   (b1) a second crosslinking agent comprising at least two polymerisable groups being free from anionic groups;
   wherein the molar ratio of component (a1) to component (b1) is at least 1; and
   wherein the molecular weight of the second crosslinking agent is below 500 Da.

2. The BPM according to claim 1 wherein the molar ratio of component (a1) to component (b1) is less than 10, preferably less than 6.

3. The BPM according to claim 1 or 2 wherein the first crosslinking agent comprises a bissulphonylimide group.

4. The BPM according to any one of the preceding claims comprising 0.008 mg/g to 25 mg/g of unreacted component (a1) and/or 0.008 mg/g to 25 mg/g of unreacted component (b1).

5. The BPM according to any one of the preceding claims which further comprises an intermediate layer located between the CEL and the AEL.

6. The BPM according to claim 5 wherein the intermediate layer comprises a co-continuous polymeric network of (i) a first polymer having ionic groups and a network of pores; and (ii) a second polymer having ionic groups of charge opposite to the charge of the ionic groups of the first polymer; and wherein the intermediate layer has been obtained by a process comprising polymerisation-induced phase-separation of the first polymer from a curable composition used to prepare the first polymer.

7. The BPM according to any one of the preceding claims wherein the at least two polymerisable groups are each independently selected from ethylenically unsaturated groups and thiol groups.

8. The BPM according to any one of the preceding claims wherein the second crosslinking agent has a melting point below 80°C and a boiling point of at least 150°C.

9. The BPM according to any one of the preceding claims wherein the second crosslinking agent is selected from divinylbenzene, 2,4,6-triallyloxy-1,3,5-triazine, 1,3,5-triallylisocyanurate, triallylamine, 1,2,4-trivinylcyclohexane,

tetra(allyloxy)ethane, pentaerythritol tetraallyl ether, 2,3-dimercapto-1-propanol, dithioerythritol, trithiocyanuric acid or a combination thereof.

**10.** The BPM according to any one of the preceding claims wherein the cation exchange layer is obtainable by curing a composition comprising:

(a1) 20 to 80wt% of component (a1);
(b1) 1 to 25wt% of component (b1);
(c1) 0 to 40wt% of a compound comprising one and only one polymerisable group (and an anionic group);
(d1) 0 to 10wt% of a radical initiator;
(e1) 0 to 40wt% of a solvent.

**11.** The BPM according to any one of the preceding claims which further comprises a catalyst, preferably a catalyst comprising a multivalent metal ion.

**12.** A process for preparing a bipolar membrane (BPM) comprising an anion exchange layer (AEL) and a cation exchange layer (CEL) which comprises curing a composition to form the CEL, wherein the composition is as defined in any one of claims 1 to 11.

**13.** The process according to claim 12 wherein the curing comprises irradiation of the composition with ultraviolet light and/or electron beam.

**14.** Use of a BPM according to any one of claims 1 to 11 for the generation of acids and bases, $CO_2$ capture, energy conversion and storage, wastewater treatment, pH-control, removal of $SO_2$ from flue gas, recycling of HF and $HNO_3$, and recovering of organic acids.

**15.** A bipolar electrodialysis device comprising an anion exchange membrane and/or a cation exchange membrane, and a BPM according to any one of claims 1 to 11.

**Patentansprüche**

**1.** Bipolare Membran (BPM), umfassend eine Anionenaustauschschicht (AEL) und eine Kationenaustauschschicht (CEL), wobei die Kationenaustauschschicht erhältlich ist durch Härten einer Zusammensetzung, umfassend:

(a1) ein erstes Vernetzungsmittel, das eine anionische Gruppe und mindestens zwei polymerisierbare Gruppen umfasst;
(b1) ein zweites Vernetzungsmittel, das mindestens zwei polymerisierbare Gruppen umfasst und frei von anionischen Gruppen ist;
wobei das Molverhältnis von Komponente (a1) zu Komponente (b1) mindestens 1 beträgt; und
wobei das Molekulargewicht des zweiten Vernetzungsmittels unter 500 Da liegt.

**2.** BPM nach Anspruch 1, wobei das Molverhältnis von Komponente (a1) zu Komponente (b1) weniger als 10, vorzugsweise weniger als 6, beträgt.

**3.** BPM nach Anspruch 1 oder 2 , wobei das erste Vernetzungsmittel eine Bissulfonylimidgruppe umfasst.

**4.** BPM nach einem der vorhergehenden Ansprüche, umfassend 0,008 mg/g bis 25 mg/g nicht umgesetzte Komponente (a1) und/oder 0,008 mg/g bis 25 mg/g nicht umgesetzte Komponente (b1).

**5.** BPM nach einem der vorhergehenden Ansprüche, die ferner eine Zwischenschicht umfasst, die sich zwischen der CEL und der AEL befindet.

**6.** BPM nach Anspruch 5, wobei die Zwischenschicht ein cokontinuierliches polymeres Netzwerk von (i) einem ersten Polymer mit ionischen Gruppen und einem Netzwerk von Poren und (ii) einem zweiten Polymer mit ionischen Gruppen mit einer Ladung, die der Ladung der ionischen Gruppen des ersten Polymers entgegengesetzt sind, umfasst; und wobei die Zwischenschicht durch ein Verfahren erhalten wurde, das die polymerisationsinduzierte Phasentrennung des ersten Polymers von einer zur Herstellung des ersten Polymers verwendeten härtbaren

Zusammensetzung umfasst.

7. BPM nach einem der vorhergehenden Ansprüche, wobei die mindestens zwei polymerisierbaren Gruppen jeweils unabhängig aus ethylenisch ungesättigten Gruppen und Thiolgruppen ausgewählt sind.

8. BPM nach einem der vorhergehenden Ansprüche, wobei das zweite Vernetzungsmittel einen Schmelzpunkt unter 80 °C und einen Siedepunkt von mindestens 150 °C aufweist.

9. BPM nach einem der vorhergehenden Ansprüche, wobei das zweite Vernetzungsmittel aus Divinylbenzol, 2,4,6-Triallyloxy-1,3,5-triazin, 1,3,5-Triallylisocyanurat, Triallylamin, 1,2,4-Trivinylcyclohexan, Tetra(allyloxy)ethan, Pentaerythritoltetraallylether, 2,3-Dimercapto-1-propanol, Dithioerythritol, Trithiocyanursäure oder einer Kombination davon ausgewählt ist.

10. BPM nach einem der vorhergehenden Ansprüche, wobei die Kationenaustauschschicht erhältlich ist durch Härten einer Zusammensetzung, umfassend:

(a1) 20 bis 80 Gew.-% Komponente (a1);
(b1) 1 bis 25 Gew.-% Komponente (b1);
(c1) 0 bis 40 Gew.-% einer Verbindung, die nur eine polymerisierbare Gruppe (und eine anionische Gruppe) umfasst;
(d1) 0 bis 10 Gew.-% eines Radikalinitiators;
(e1) 0 bis 40 Gew.-% eines Lösungsmittels.

11. BPM nach einem der vorhergehenden Ansprüche, die ferner einen Katalysator umfasst, vorzugsweise einen Katalysator, der ein mehrwertiges Metallion umfasst.

12. Verfahren zur Herstellung einer bipolaren Membran (BPM), die eine Anionenaustauschschicht (AEL) und eine Kationenaustauschschicht (CEL) umfasst, bei dem man eine Zusammensetzung unter Bildung der CEL härtet, wobei die Zusammensetzung wie in einem der Ansprüche 1 bis 11 definiert ist.

13. Verfahren nach Anspruch 12 , wobei das Härten das Bestrahlen der Zusammensetzung mit ultraviolettem Licht und/oder Elektronenstrahlen umfasst.

14. Verwendung eines BPM nach einem der Ansprüche 1 bis 11 zur Erzeugung von Säuren und Basen, $CO_2$-Abscheidung, Energieumwandlung und -speicherung, Abwasserbehandlung, pH-Steuerung, Entfernung von $SO_2$ aus Rauchgas, Rezyklierung von HF und $HNO_3$ und Rückgewinnung von organischen Säuren.

15. Bipolare Elektrodialysevorrichtung, umfassend eine Anionenaustauschmembran und/oder eine Kationenaustauschmembran und eine BPM nach einem der Ansprüche 1 bis 11.

## Revendications

1. Membrane bipolaire (BPM) comprenant une couche échangeuse d'anions (AEL) et une couche échangeuse de cations (CEL), dans laquelle la couche échangeuse de cations peut être obtenue par durcissement d'une composition comprenant :

(a1) un premier agent de réticulation comprenant un groupe anionique et au moins deux groupes polymérisables ;
(b1) un second agent de réticulation comprenant au moins deux groupes polymérisables qui sont exempts de groupes anioniques ;
dans laquelle le rapport molaire du composant (a1) sur composant (b1) est au moins 1 ; et
dans laquelle le poids moléculaire du second agent de réticulation est inférieur à 500 Da.

2. BPM selon la revendication 1, dans laquelle le rapport molaire du composant (a1) sur composant (b1) est inférieur à 10, de préférence inférieur à 6.

3. BPM selon la revendication 1 ou 2, dans laquelle le premier agent de réticulation comprend un groupe bissulfonylimide.

4. BPM selon l'une quelconque des revendications précédentes, comprenant 0,008 mg/g à 25 mg/g de composant (a1) n'ayant pas réagi et/ou 0,008 mg/g à 25 mg/g de composant (b1) n'ayant pas réagi.

5. BPM selon l'une quelconque des revendications précédentes, qui comprend en outre une couche intermédiaire située entre la CEL et la AEL.

6. BPM selon la revendication 5, dans laquelle la couche intermédiaire comprend un réseau de polymère co-continu de (i) un premier polymère ayant des groupes ioniques et un réseau de pores ; et (ii) un second polymère ayant des groupes ioniques de charge opposée à la charge des groupes ioniques du premier polymère ; et dans laquelle la couche intermédiaire a été obtenue par un procédé comprenant une séparation de phase induite par polymérisation du premier polymère à partir d'une composition durcissable utilisée pour préparer le premier polymère.

7. BPM selon l'une quelconque des revendications précédentes, dans laquelle les au moins deux groupes polymérisables sont chacun indépendamment choisis parmi des groupes éthyléniquement insaturés et des groupes thiol.

8. BPM selon l'une quelconque des revendications précédentes, dans laquelle le second agent de réticulation a un point de fusion inférieur à 80 °C et un point d'ébullition d'au moins 150 °C.

9. BPM selon l'une quelconque des revendications précédentes, dans laquelle le second agent de réticulation est choisi parmi divinylbenzène, 2,4,6-triallyloxy-1,3,5-triazine, 1,3,5-triallylisocyanurate, triallylamine, 1,2,4-trivinylcyclohexane, tétra(allyloxy)éthane, éther tétraallylique de pentaérythritol, 2,3-dimercapto-1-propanol, dithioérythritol, acide trithiocyanurique ou une combinaison de ceux-ci.

10. BPM selon l'une quelconque des revendications précédentes, dans laquelle la couche échangeuse de cations peut être obtenue par durcissement d'une composition comprenant :

(a1) 20 à 80 % en poids de composant (a1) ;
(b1) 1 à 25 % en poids de composant (b1) ;
(c1) 0 à 40 % en poids d'un composé comprenant un et seulement un groupe polymérisable (et un groupe anionique) ;
(d1) 0 à 10 % en poids d'un initiateur de radicaux ;
(e1) 0 à 40 % en poids d'un solvant.

11. BPM selon l'une quelconque des revendications précédentes, qui comprend en outre un catalyseur, de préférence un catalyseur comprenant un ion métallique multivalent.

12. Procédé de préparation d'une membrane bipolaire (BPM), comprenant une couche échangeuse d'anions (AEL) et une couche échangeuse de cations (CEL) qui comprend le durcissement d'une composition pour former la CEL, dans lequel la composition est telle que définie dans l'une quelconque des revendications 1 à 11.

13. Procédé selon la revendication 12, dans lequel le durcissement comprend l'irradiation de la composition avec de la lumière ultraviolette et/ou un faisceau d'électrons.

14. Utilisation d'une BPM selon l'une quelconque des revendications 1 à 11 pour la génération d'acides et de bases, la capture de $CO_2$, la conversion et le stockage d'énergie, le traitement des eaux usées, la régulation d'un pH, l'élimination de $SO_2$ de gaz de combustion, le recyclage de HF et $HNO_3$, et la récupération d'acides organiques.

15. Dispositif d'électrodialyse bipolaire, comprenant une membrane échangeuse d'anions et/ou une membrane échangeuse de cations, et une BPM selon l'une quelconque des revendications 1 à 11.

FIG. 1

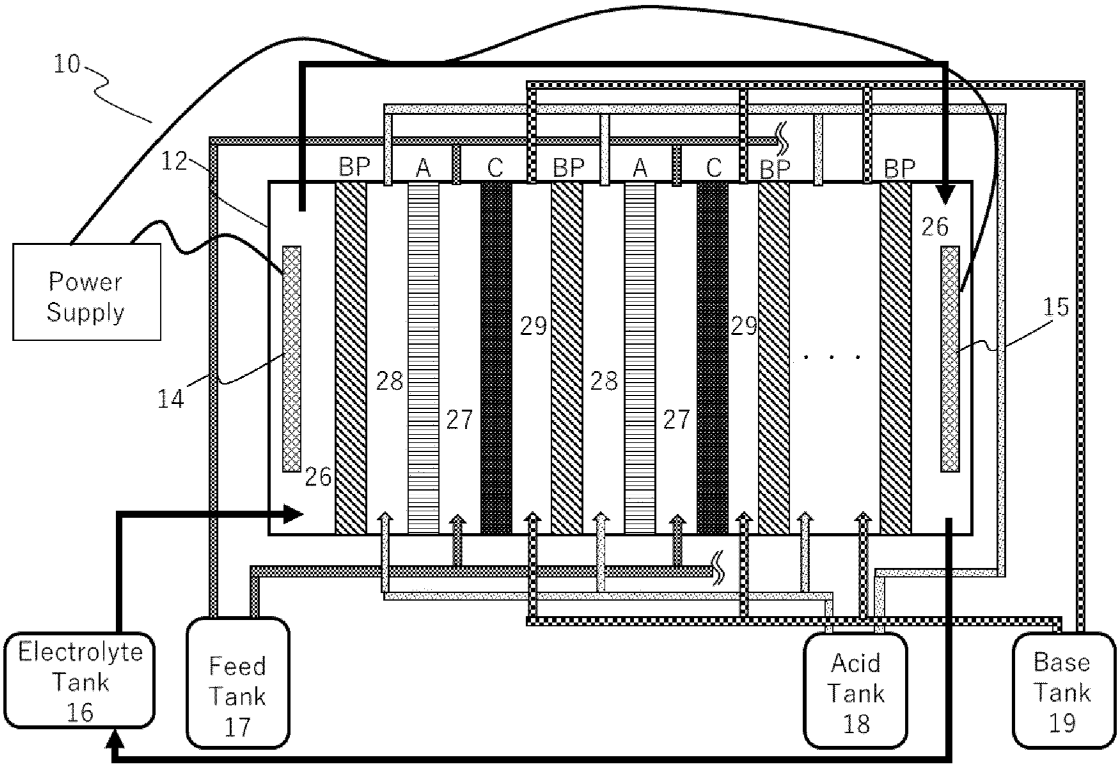
10
12
BP
A
C
BP
A
C
BP
BP
26
Power
Supply
14
26
28
27
29
28
27
29
15
Electrolyte
Tank
16
Feed
Tank
17
Acid
Tank
18
Base
Tank
19

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5401408 A
- US 20150353696 A
- US 20160369017 A
- JP 47006416 B
- JP S476416 B
- JP 47003981 B
- JP S473981 B
- JP 47022326 B
- JP S4722326 B
- JP 47023664 B
- JP S4723664 B
- JP 57030704 A
- JP S5730704 A
- JP 60026483 B
- JP S6026483 B
- JP 60026403 B
- JP S6026403 B
- JP 62081345 A
- JP S6281345 A
- JP 1034242 B
- JP H0134242 B
- US 4318791 A
- EP 0284561 A1
- JP 2211452 A
- JP H02211452 A
- JP 61194062 A
- JP S61194062 A
- JP 2009597 B
- JP H029597 B
- JP 2009596 B
- JP H029596 B
- JP 63061950 B
- JP S6361950 B
- JP 59042864 B
- JP S5942864 B
- JP 2008105379 A
- JP 2009114290 A
- US 20150353721 A
- US 20160367980 A
- US 20140378561 A
- EP 3184558 A
- US 20160001238 A
- EP 2979748 A1


### Non-patent literature cited in the description


- **KATO KIYOMI**. Ultraviolet Curing System. Research Center Co., Ltd, 1989